# FASCICULE DE BREVET EUROPEEN

(11) **EP 0 336 820 B1**
(45) Date de publication et mention de la délivrance du brevet: **13.01.1993**
(21) Numéro de dépôt: 89400880.4
(22) Date de dépôt: 29.03.1989
(51) Int. Cl.: G03G 19/00, B41J 2/385

(54) **Dispositif pour former des images latentes magnétiques sur l'élément d'enregistrement d'une imprimante magnétographique**
Vorrichtung zur Bildung latenter magnetischer Bilder auf einem Aufzeichnungsträger in einem Drucker
Device for forming latent magnetic images on a recording element of a magnetographic printer

(30) Priorité: 30.03.1988 FR 8804215
(43) Date de publication de la demande: 11.10.1989
(73) Titulaire: BULL S.A., 92800 Puteaux (FR)
(72) Inventeur: Cherbuy, Bernard, Essert F-90000 Belfort (FR)
(74) Mandataire: Corlu, Bernard Edouard

(56) Documents cités:
- EP-A- 0 142 446
- FR-A- 2 443 335
- PATENT ABSTRACTS OF JAPAN, vol. 8, no 224 (M-331)(1661), 13 octobre 1984 ; & JP-A-59 106 976 (IWASAKI TSUSHINKI KK) 20.06.1984.

## Description

La présente invention se rapporte à un dispositif pour former des images latentes magnétiques sur l'élément d'enregistrement d'une imprimante magnétographique.

On connaît des machines imprimantes magnétographiques qui, en réponse à la réception de signaux électriques provenant d'une unité de commande, permettent de former des images, telles que des images de caractères par exemple, sur un support d'impression constitué généralement par une bande ou une feuille de papier. Dans ces machines imprimantes, qui sont analogues à celle qui a été décrite et représentée dans le brevet des Etats-Unis d'Amérique N° 3.161.544, l'impression des images est réalisée en formant d'abord, à partir des signaux reçus, une image latente magnétique sur la surface d'un élément d'enregistrement magnétique ayant généralement la forme d'un tambour rotatif ou d'une courroie sans fin, cet élément d'enregistrement étant revêtu d'une couche de matériau magnétique. Cette image latente magnétique est ensuite développée, c'est-à-dire rendue visible, à l'aide d'un révélateur pulvérulent qui, constitué de fines particules de résine thermoplastique renfermant des particules magnétiques et des pigments, n'est attiré que par les régions de l'élément d'enregistrement sur lesquelles a été enregistrée l'image latente, ce révélateur formant alors une image de poudre à la surface de cet élément. Après quoi, cette image de poudre est transférée sur le support d'impression.

Afin de permettre la formation de l'image latente magnétique sur la surface de l'élément d'enregistrement, ces machines sont pourvues d'un organe d'enregistrement, appelé transducteur, qui comporte une ou plusieurs têtes d'enregistrement magnétique à proximité desquelles se déplace cet élément d'enregistrement. Chacune de ces têtes engendre, chaque fois qu'elle est excitée pendant un court instant par un courant électrique d'intensité convenable, un champ magnétique qui a pour effet de créer, sur la surface de l'élément d'enregistrement qui défile devant ces têtes, des domaines magnétisés de petites dimensions, ces domaines, pratiquement ponctuels, étant généralement désignés sous le nom de points magnétisés.

L'ensemble de ces points magnétisés constitue l'image latente magnétique. La portion de surface de l'élément d'enregistrement qui passe ainsi devant chaque tête est désignée habituellement sous le nom de piste d'enregistrement d'informations, l'élément d'enregistrement comportant, en général, plusieurs pistes qui peuvent être soumises à l'enregistrement, soit individuellement au cours d'opérations d'enregistrement successives, soit simultanément au cours d'une seule opération.

Dans les machines imprimantes magnétographiques, chacun des caractères imprimés résulte de l'impression, sur le support d'impression, d'un ensemble de points situés à l'intérieur d'une matrice, chacun de ces points étant obtenu par le transfert, sur ce support, de particules de révélateur déposées préalablement sur un point magnétisé correspondant de l'élément d'enregistrement. Etant donné que les points magnétisés qui sont formés sur cet élément d'enregistrement ont toujours des dimensions très petites, c'est-à-dire voisines, par exemple, de soixante-dix µm, et que la distance (de centre à centre) qui sépare deux points contigus est légèrement supérieure à la taille de ces points, c'est-à-dire, par exemple, de l'ordre d'une centaine de µm, on a constaté que, en utilisant ces points pour constituer des caractères standart, c'est-à-dire des caractères dont la hauteur est égale à un dizième de pouce (soit environ 2,54 mm), il était très difficile de former certains caractères comportant dans leur configuration, des traits courbes ou des traits obliques, tels que, par exemple, les caractères "V", "W", "X", "Y", "M", "C", "3" et "7".

En effet, compte-tenu de l'espacement relativement grand entre deux points voisins situés sur une ligne oblique,les parties courbes ou obliques de ces caractères apparaissent toujours discontinues et peu marquées. Certes, on sait que, pour obtenir des traits plus épais et par conséquent mieux visibles, on peut renforcer ces traits en utilisant, pour la formation de chacun de ces traits, non pas une, mais plusieurs lignes contigües de points. C'est ainsi, par exemple, que, pour constituer le trait oblique du caractère "N", on pourra utiliser deux ou trois lignes obliques contigües de points. Cependant, cette manière de faire ne se révèle pas totalement satisfaisante du fait que les caractères présentant des parties courbes ou obliques que l'on obtient ainsi, bien que parfaitement lisibles, apparaissent toujours plus ou moins déformés.

Afin de remédier à cet inconvénient, on a songé à mettre en oeuvre une solution qui a été décrite dans le brevet français N° 2.042.947 et qui consiste à réduire les espacements entre les lignes de points, sans pour autant modifier la taille de ces points et les dimensions de ces caractères. Mais cette solution, qui permettrait d'améliorer les qualités esthétiques des caractères, se révèle totalement inadaptée au cas des imprimantes magnétographiques pour la raison qu'elle conduit nécessairement à faire chevaucher les points magnétisés qui sont formés sur l'élément d'enregistrement, ce qui a pour effet de réduire considérablement la force d'attraction magnétique dans la partie centrale de chacune des zones formées par le chevauchement de ces points et de provoquer ainsi un encrage insuffisant des caractères.

Certes, on peut éliminer ce défaut en diminuant la taille des points, compte-tenu de la réduction des espacements entre les lignes de points, de manière à supprimer ces chevauchements, mais cette façon de faire, qui oblige à augmenter encore le nombre de lignes de points entrant dans la constitution de chacun des traits des caractères, nécessite un accroissement important du nombre des circuits servant à la formation de ces points, ainsi que des équipements assurant l'alimentation électrique de ces circuits, ce qui a pour conséquence de rendre la machine imprimante particulièrement encombrante et coûteuse. En outre, cette façon de faire ne permet pas de corriger, de manière satisfaisante, la déformation des caractères.

La présente invention remédie à ces inconvénients et propose un dispositif qui permet de former des images latentes magnétiques sur l'élément d'enregistrement d'une imprimante magnétographique et qui utilise, pour cette formation, des points magnétisés de tailles différentes, disposés les uns par rapport aux autres de telle sorte que ces points ne se chevauchent pas.

Plus précisément, la présente invention concerne un dispositif de formation d'images latentes magnétiques comprenant un élément d'enregistrement et plusieurs têtes d'enregistrement magnétique, cet élément d'enregistrement étant entraîné en déplacement suivant une direction prédéterminée et étant pourvu de pistes d'enregistrement magnétique orientées pratiquement parallèlement à cette direction, lesdites pistes étant écartées les unes des autres d'un pas constant, ce dispositif étant caractérisé en ce que, il comprend :
- au moins deux têtes d'enregistrement magnétique présentant chacune un pôle d'enregistrement dont la largeur diffère d'une tête à l'autre, la largeur du pôle le plus large étant supérieure au pas d'espacement des pistes, la largeur du pôle le plus étroit étant telle que la somme des largeurs du pôle le plus large et du pôle le plus étroit est inférieure au double dudit pas d'espacement,
- un organe d'entraînement établi pour amener ces têtes successivement en face de chacune desdites pistes et permettre à ces têtes, lorsqu'elles sont excitées sélectivement, de former des points magnétisés de tailles différentes centrés sur ces pistes,
- et une unité de commande d'activation des têtes établie pour exciter sélectivement ces têtes de telle manière que les points magnétisés formés sur l'élément d'enregistrement ne se chevauchent pas.

L'invention sera mieux comprise et d'autres buts et avantages de celle-ci apparaîtront mieux dans la description suivante, donnée à titre d'exemple non limitatif, et en se référant aux dessins annexés sur lesquels :
- La figure 1 représente une machine imprimante magnétographique équipée d'un dispositif de formation d'images latentes réalisé selon l'invention,
- La figure 2 est une vue montrant la structure du dispositif d'enregistrement qui fait partie du dispositif de formation d'images latentes équipant la machine représentée sur la figure 1,
- Les figures 3A à 3D représentent, lorsqu'elles sont assemblées, une partie du schéma logique détaillé des circuits de commande constitutifs du dispositif de formation d'images latentes,

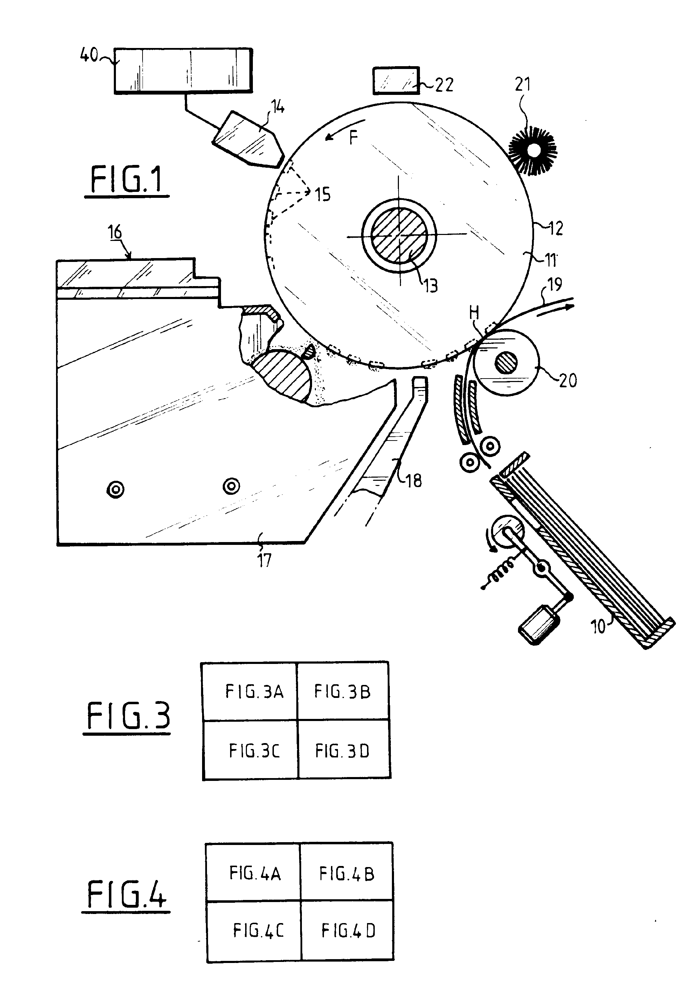

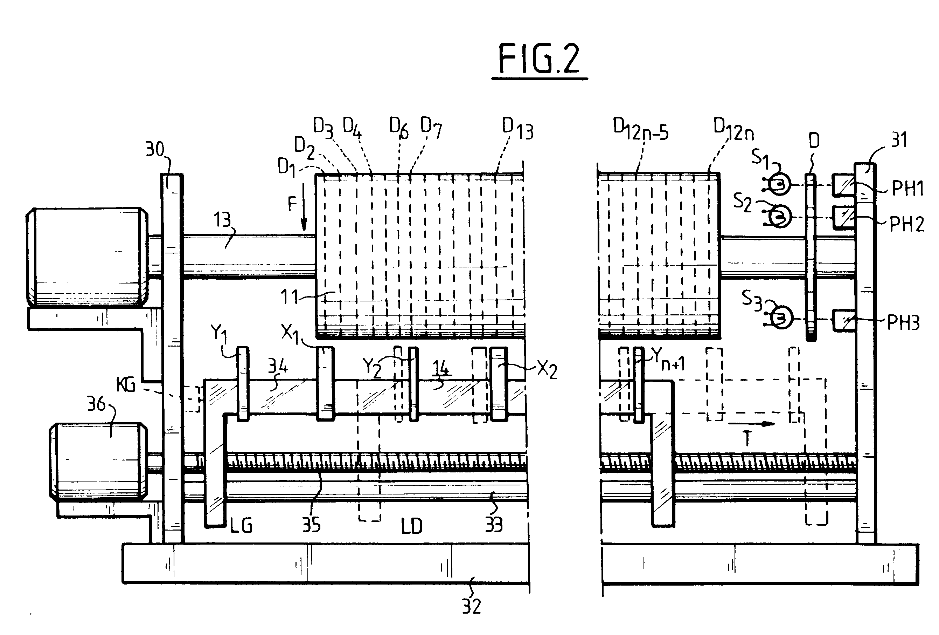

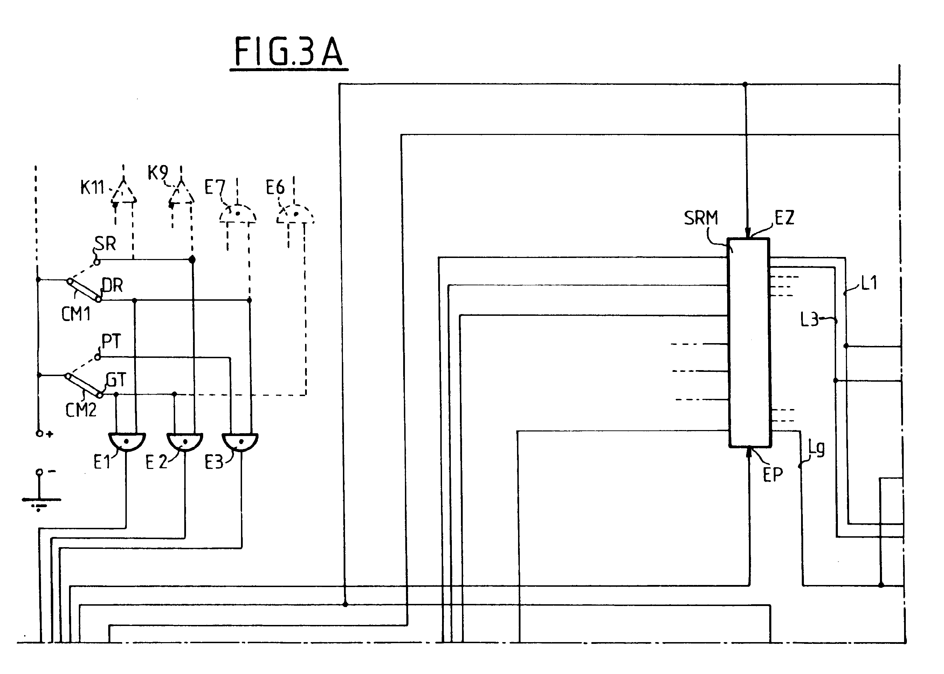

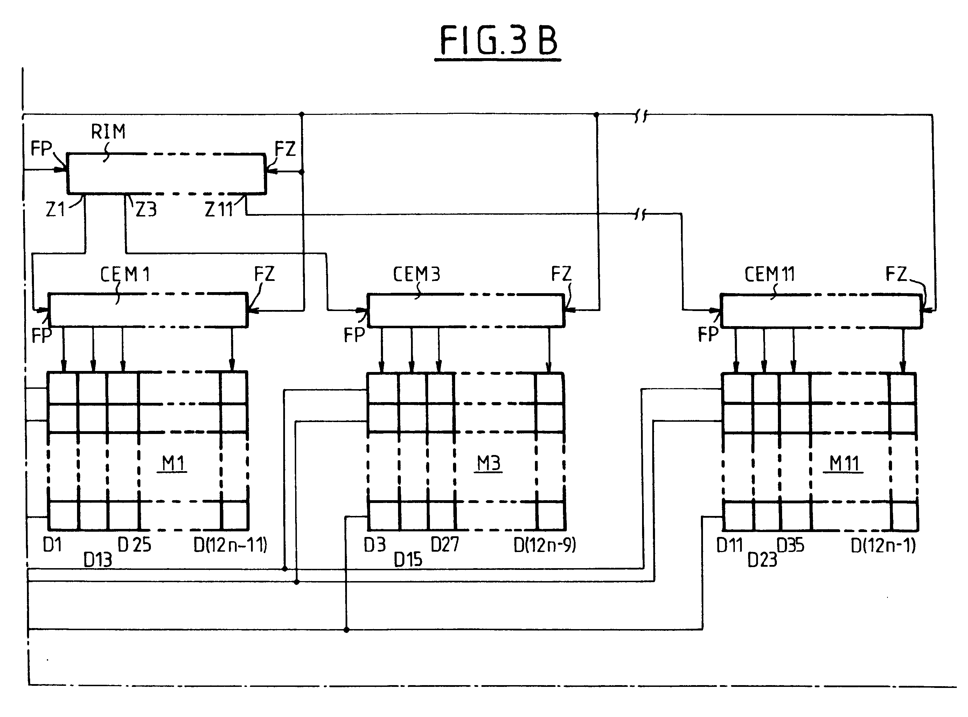

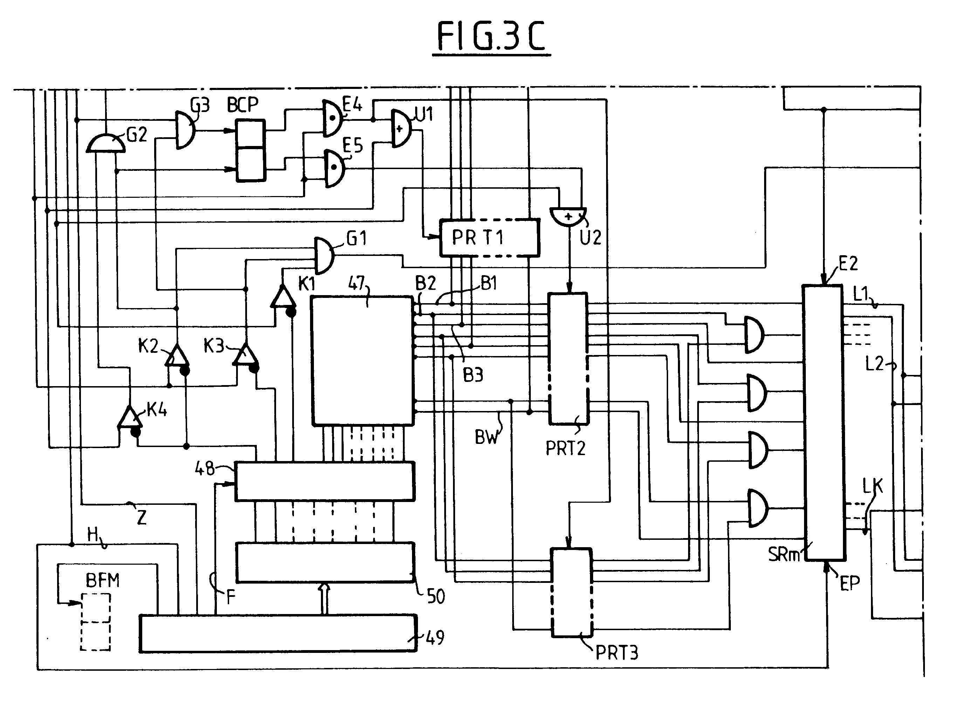

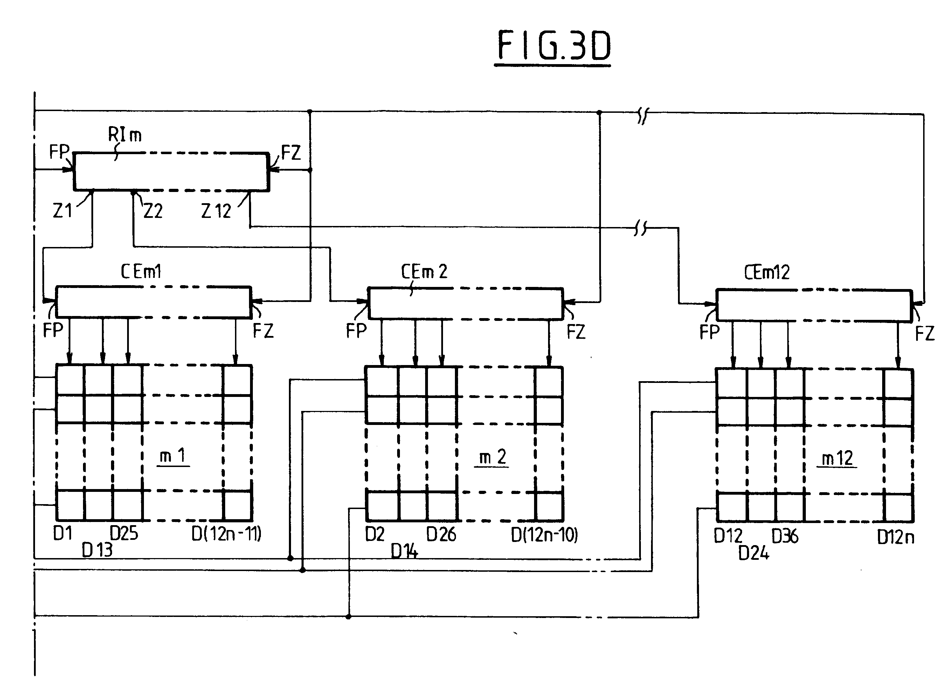

- La figure 3 montre la façon dont sont assemblées les figures 3A à 3D,

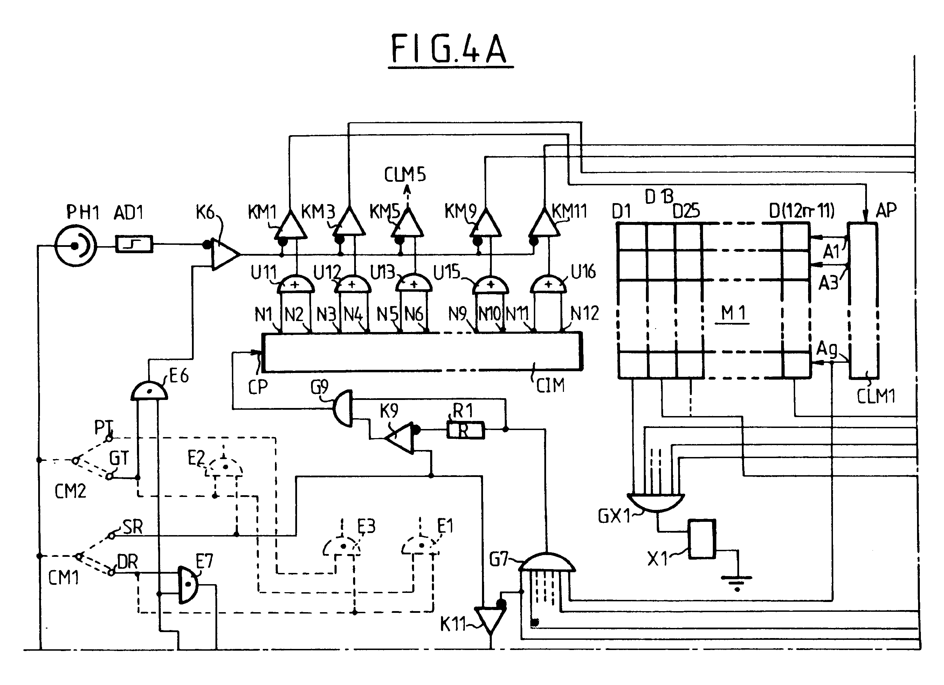

- Les figures 4A à 4D représentent, lorsqu'elles sont assemblées, une autre partie du schéma logique détaillé des circuits de commande constitutifs du dispositif de formation d'images latentes,

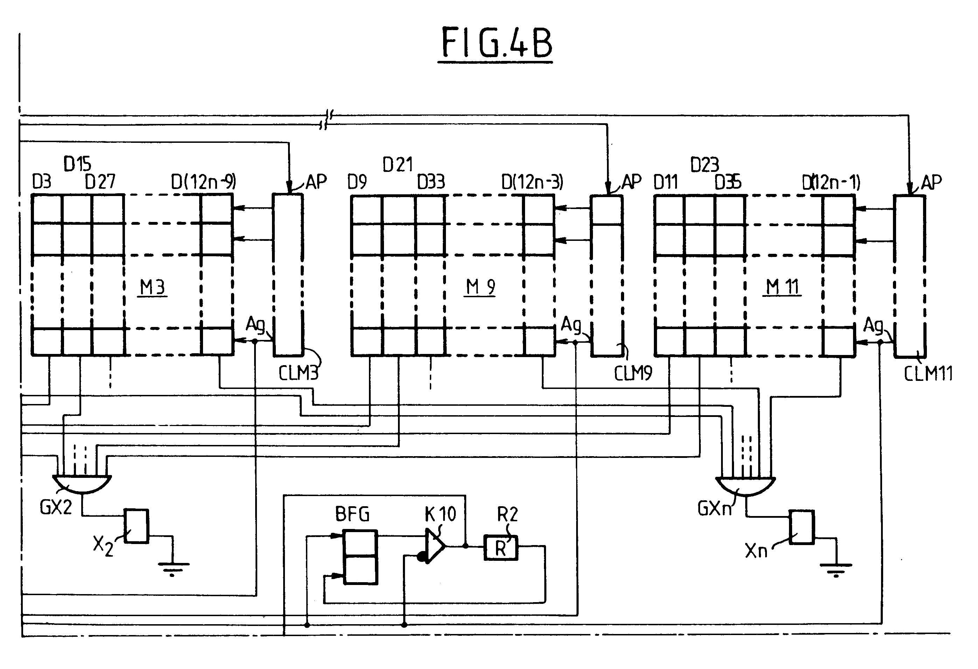

- La figure 4 montre la façon dont sont assemblées les figures 4A à 4D,

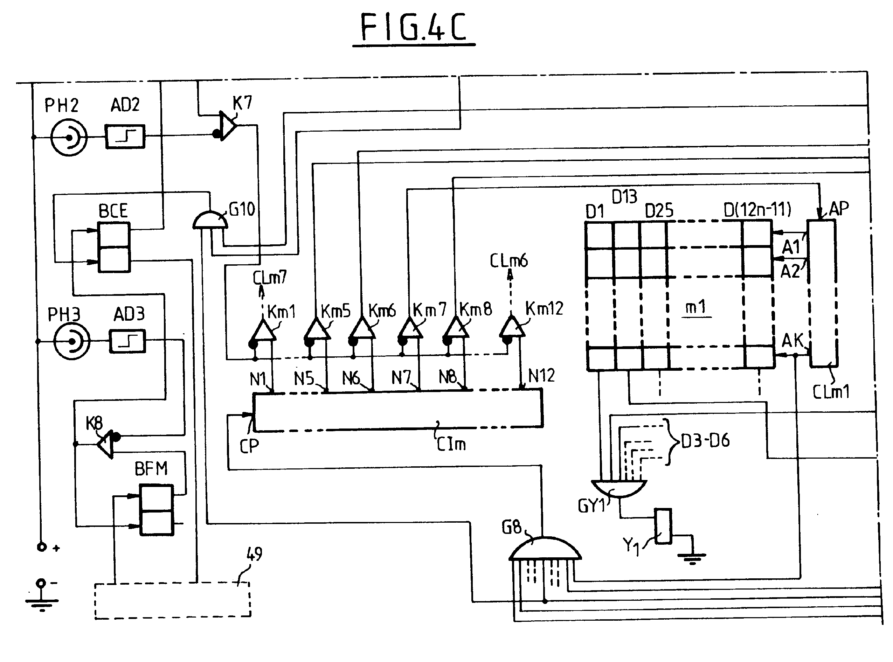

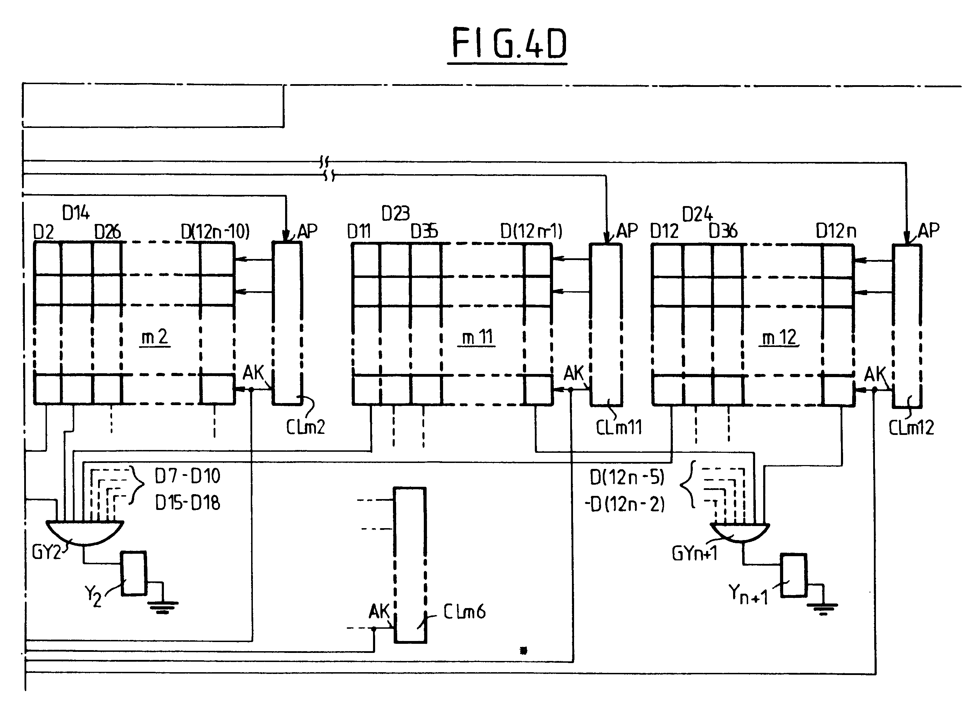

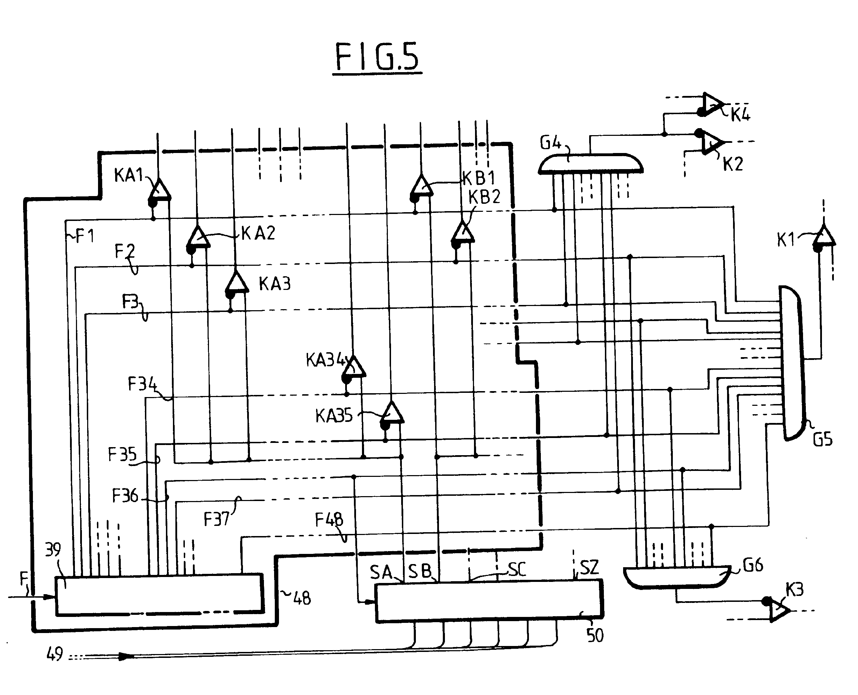

- La figure 5 représente la structure de l'organe de commande d'excitation qui est utilisé dans le schéma représenté sur les figures 3A à 3D,

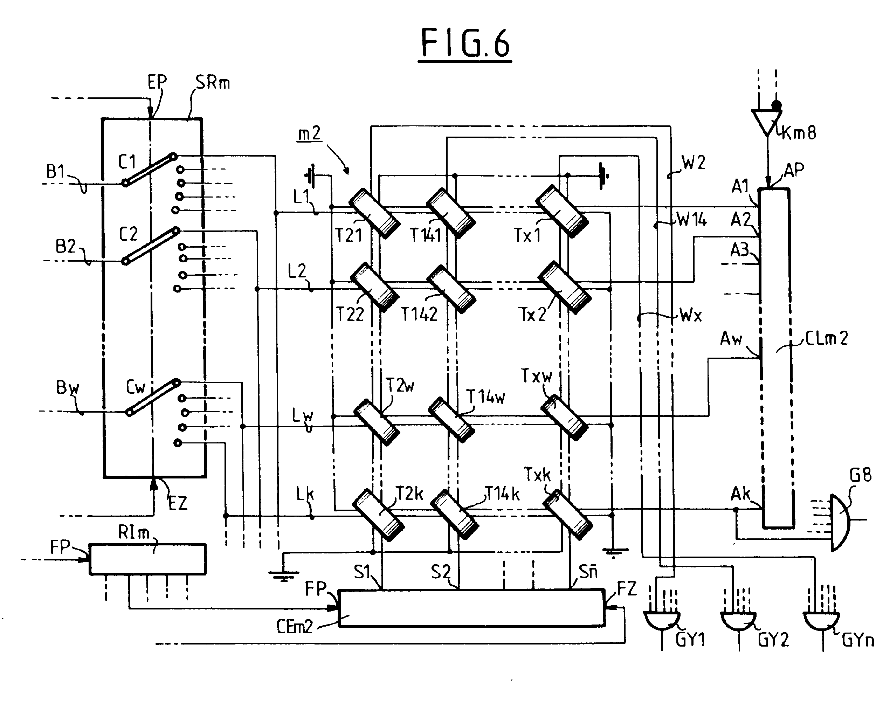

- La figure 6 montre la constitution de l'un des blocs de mémorisation qui sont utilisés dans le schéma représenté sur les figures 3A à 3D et 4A à 4D.

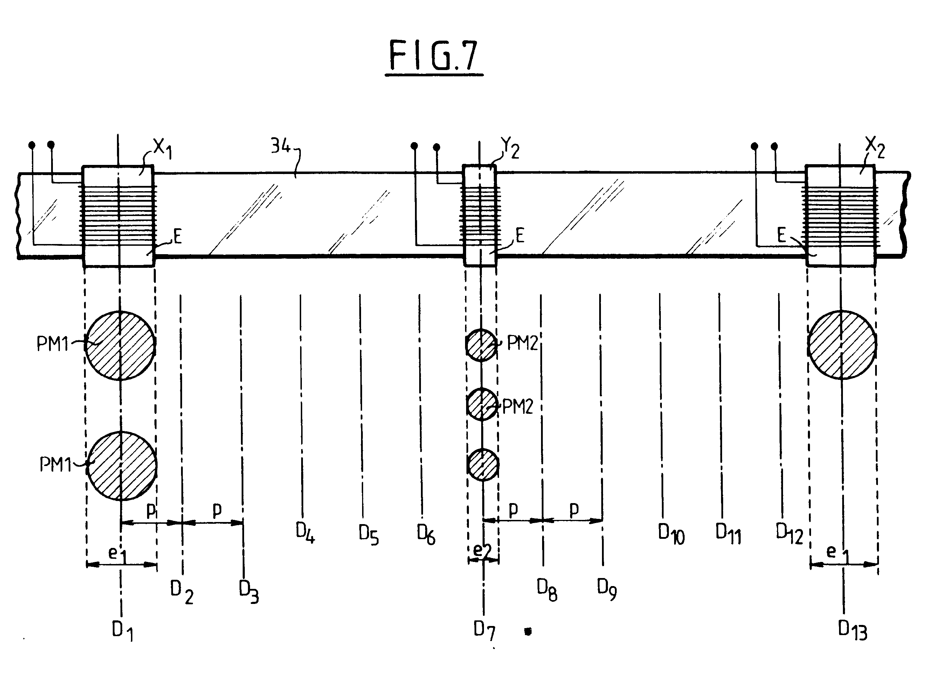

- La figure 7 est un détail montrant la taille et la disposition respective des têtes d'enregistremnet qui équipent le dispositif d'enregistrement représenté sur la figure 2,

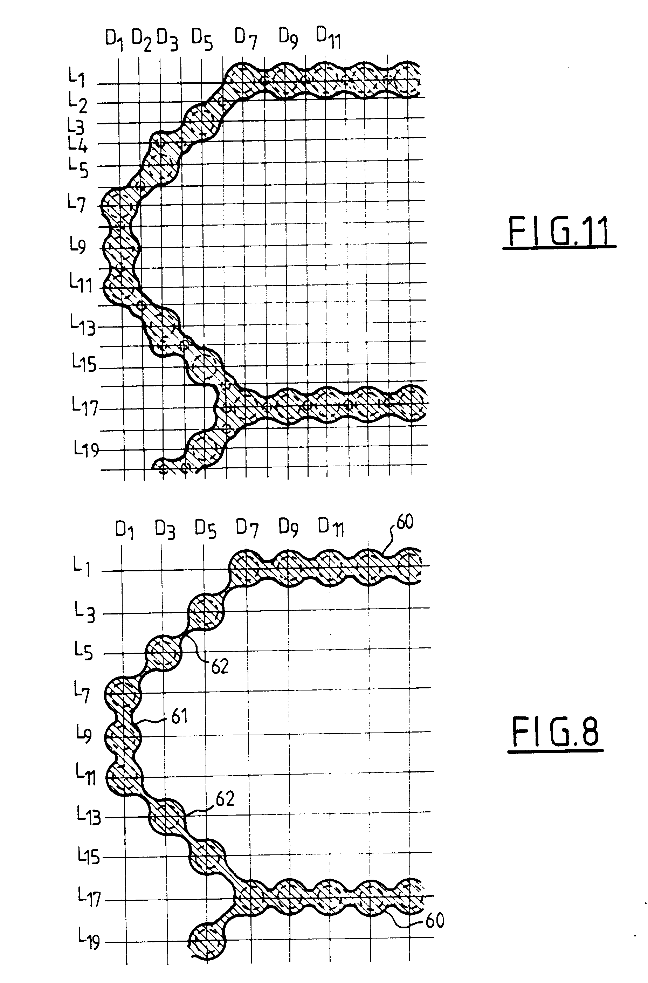

- La figure 8 montre la configuration d'une image de poudre obtenue lorsque le dispositif de formation d'images latentes est utilisé selon un premier mode de fonctionnement,

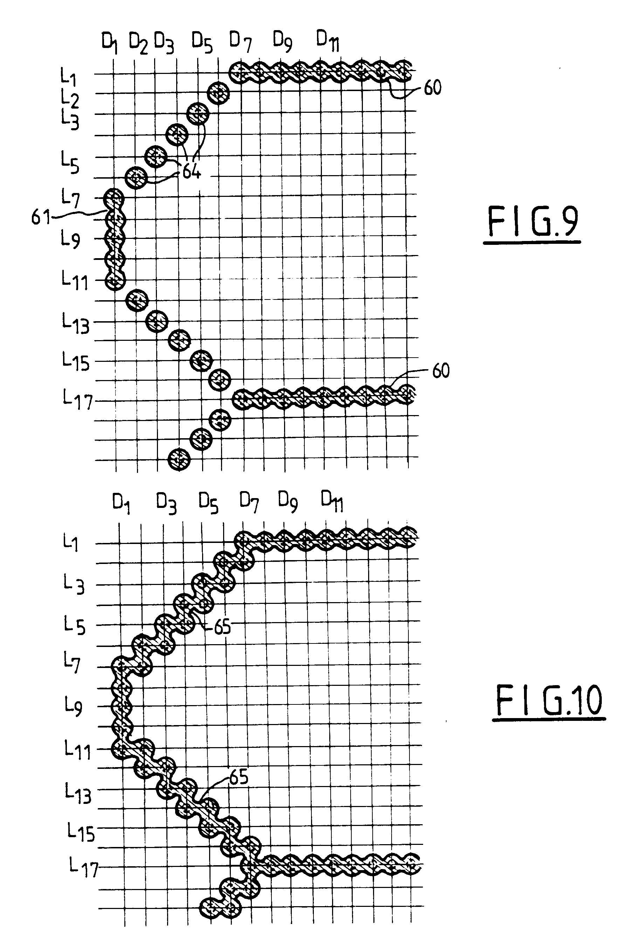

- La figure 9 montre la configuration d'une image de poudre obtenue lorsque le dispositif de formation d'images latentes est utilisé selon un deuxième mode de fonctionnement,
- La figure 10 montre la configuration d'une autre image de poudre obtenue lorsque le dispositif de formation d'images latentes est utilisé selon le deuxième mode de fonctionnement, et
- La figure 11 montre la configuration d'une image de poudre obtenue lorsque le dispositif de formation d'images latentes est utilisé selon un troisième mode de fonctionnement.

La machine imprimante qui a été schématiquement représentée sur la figure 1 est une machine qui réalise l'impression de feuilles de papier qui sont extraites successsivement, de manière connue, d'un magasin d'alimentation 10.

Cette machine comprend un élément d'enregistrement qui est constitué, dans l'exemple décrit, par un tambour 11 pourvu d'une surface d'enregistrement magnétique 12.

Ce tambour 11, qui est monté de manière à pouvoir tourner autour d'un axe horizontal 13, est entraîné en rotation dans le sens indiqué par la flèche F, par un moteur électrique (non représenté). L'enregistrement des informations sur ce tambour est réalisé par un dispositif d'enregistrement 14 dont la structure sera décrite un peu plus loin, ce dispositif 14 étant commandé par une unité de commande d'activation 40 qui sera également décrite plus loin. On considèrera, pour le moment, que ce dispositif 14 comporte plusieurs têtes d'enregistrement magnétique. Chacune de ces têtes engendre, chaque fois qu'elle est excitée pendant un court instant par un courant électrique, un champ magnétique variable, ce qui a pour effet de créer, sur la surface cylindrique 12 du tambour qui défile devant ces têtes, des zones magnétisées 15, pratiquement ponctuelles, l'ensemble de ces zones constituant une image latente magnétique correspondant à une image à imprimer. Ces zones magnétisées passent alors devant un dispositif applicateur 16 de type connu, qui est disposé au-dessous du tambour 11 et qui permet d'appliquer sur la surface cylindrique de ce tambour des particules d'un révélateur pulvérulent contenu dans un réservoir 17. Les particules de révélateur qui sont ainsi appliquées par ce dispositif sur le tambour n'adhèrent, en principe, que sur les zones magnétisées de celui-ci et forment alors une image de poudre sur la surface 12 du tambour. Un dispositif de retouche 18, devant lequel passe ensuite cette image, permet d'éliminer les particules de révélateur qui ont adhéré ailleurs que sur les zones magnétisées du tambour, ainsi que les particules qui se trouvent en surnombre sur ces zones. Il y a lieu d'indiquer ici que le révélateur qui est ainsi déposé sur la surface 12 du tambour est constitué de fines particules de résine thermoplastique contenant des particules magnétiques et des pigments, cette résine étant capable de fondre lorsqu'elle est soumise à une source de chaleur et de se fixer ainsi sur une feuille de papier sur laquelle ce révélateur a été transféré. Après quoi, les particules de révélateur qui, après être passées devant ce dispositif de retouche 18, subsistent sur le tambour 11 sont normalement transférées, en quasi-totalité, sur une feuille de papier 19, qui, après avoir été extraite du magasin 10, est appliquée, au moyen d'un rouleau de transfert 20, contre la surface du tambour 11. La région H où ce rouleau 20 vient contacter la surface de ce tambour, lorsque aucune feuille n'est engagée entre ce rouleau et ce tambour, constitue le poste de transfert. C'est dans ce poste que s'effectue le transfert, sur une feuille de papier qui se trouve engagée entre le tambour 11 et le rouleau 20, de l'image de poudre qui a été formée sur la surface de ce tambour. Les particules de révélateur qui, lorsque ce transfert est réalisé, subsistent encore sur la surface du tambour sont alors enlevées au moyen d'un dispositif de nettoyage 21. Les zones magnétisées qui ont défilé devant le dispositif de nettoyage 21 passent ensuite devant un dispositif d'effacement 22, ce qui permet aux portions du tambour 11 qui ont été ainsi démagnétisées par ce dernier dispositif de pouvoir être à nouveau magnétisées lorsqu'elles se représentent devant le dispositif d'enregistrement 14.

La structure du dispositif d'enregistrement qui équipe la machine représentée sur la figure 1 est illustrée sur la figure 2. Si on se réfère alors à cette dernière figure, on voit que l'axe 13 autour duquel tourne le tambour 11 est supporté à ses extrémités par deux plaques de support verticales 30 et 31 rendues solidaires l'une de l'autre au moyen d'une plaque de liaison transversale 32. Les plaques 30 et 31 supportent en outre une barre de guidage 33 qui est disposée parallèlement à l'axe 13 du tambour 11. Un chariot 34, monté coulissant sur cette barre 33, peut être entraîné en déplacement en pas-à-pas, suivant une direction T parallèle à l'axe 13 du tambour, au moyen d'une tige filetée 35 solidaire de l'arbre d'entraînement d'un moteur électrique 36 lui-même fixé sur la plaque verticale 30. Sur le chariot 34 sont montées des têtes d'enregistrement magnétique Y₁, X₁, Y₂, X₂,...., Y_{n + 1}, sur le détail desquelles on reviendra un peu plus loin. Lorsque le moteur 36 est excité, ces têtes, qui sont solidaires du chariot 34, sont alors entraînées en déplacement suivant la direction T qui est parallèle à l'axe 13 du tambour.

Ces têtes sont placées sur le chariot 34 de manière à se trouver à proximité immédiate de la surface 12 du tambour 11, ou à venir à proximité immédiate de cette surface au cours du déplacement du chariot. Le chariot 34 et les têtes qu'il porte peuvent être déplacées entre deux positions limites dont l'une LG est représentée en traits pleins sur la figure 2 et dont l'autre LD est représentée en traits interrompus sur cette même figure. La portion de surface du tambour 11 qui défile devant chacune de ces têtes, lorsque le chariot 34 est immobile, est désignée habituellement sous le nom de piste. Ces pistes, qui sont relativement étroites, sont centrées sur des lignes qui dans la suite du texte seront dénommées lignes de centrage des pistes. Sur la figure 2, ces lignes, qui sont circulaires et écartées les unes des autres d'un pas constant p, ont été représentées en tirets et désignées par des références D₁, D₂, D₃, ..., D₁₂ₙ. Pour des raisons de clarté du dessin, ces lignes de centrage ont été représentées, sur la figure 2, dans des positions relativement écartées les unes des autres. Il faut cependant signaler que, en réalité, ces lignes, ainsi que les pistes qui sont centrées sur ces lignes sont très proches les unes des autres et que, dans l'exemple décrit, le pas p d'espacement des pistes, c'est-à-dire la distance p qui sépare deux lignes de centrage voisines, est sensiblement égale à cinquante trois microns. Par ailleurs, on peut voir, sur la figure 2, que le nombre de têtes qui sont fixées sur le chariot 34 est inférieur au nombre de lignes de centrage du tambour 11 et que, lorsque ce chariot est immobilisé dans sa position limite LG (à gauche sur la figure 2), chacune des têtes X₁, Y₂, X₂, ..., Y_{n + 1} se trouve exactement en face de l'une de ces lignes de centrage. C'est ainsi que, dans l'exemple décrit, lorsque le chariot 34 est placé dans sa position LG, la tête X₁ se trouve en face de la ligne D₁, la tête Y₂ se trouve en face de la ligne D₇, la tête X₂ se trouve en face de la ligne D₁₃ et la tête Y_{n + 1} se trouve en face de la ligne D_{12 n - 5}.

Ainsi qu'on peut le remarquer sur la figure 2 et, mieux encore, sur la vue de détail illustrée par la figure 7, les têtes d'enregistrement qui sont fixées sur le chariot 34 ne sont pas toutes identiques, mais diffèrent les unes des autres de par leurs dimensions. Plus précisément, comme on peut le voir sur les figures 2 et 7, les têtes d'enregistrement qui sont montées sur le chariot 34 se répartissent en deux séries de têtes, à savoir une première série comprenant n têtes de même taille X₁, X₂, ..., Xₙ et une seconde série comprenant n + 1 têtes de même taille Y₁, Y₂, ..., Y_{n + 1}, la taille des têtes de cette seconde série étant différente de celle des têtes de la première série. La figure 7 montre que chacune de ces têtes est constituée d'un noyau de matériau magnétiquement doux, pourvu d'un enroulement d'excitation et présentant, à l'une de ses extrémités, un pôle d'enregistrement E. Il y a lieu de signaler ici que, comme on peut le voir sur la figure 7, la largeur e₁ du pôle d'enregistrement des têtes de la première série X₁, X₂, ..., Xₙ est supérieure au pas p d'espacement des pistes, mais inférieure au double de la valeur de ce pas, tandis que la largeur e₂ du pôle d'enregistrement des têtes de la seconde série Y₁, Y₂, ..., Y_{n +1} est telle que la somme e₁ + e₂ est inférieure au double du pas p d'espacement des pistes.

C'est ainsi que, dans l'exemple décrit, la largeur e₁ du pôle d'enregistrement de chacune des têtes X₁, X₂, ..., Xₙ est égale à soixante-dix µm et la largeur e₂ du pôle d'enregistrement de chacune des têtes Y₁, Y₂, ..., Y_{n + 1} est égale à trente-cinq µm. Dans ces conditions, lorsque ces têtes sont excitées sélectivement pendant un très court instant par un courant électrique, les têtes excitées de la première série X₁ à Xₙ forment, sur la surface magnétique du tambour 11, des points magnétisés PM1 de taille relativement grosse, c'est-à-dire des points dont la dimension est supérieure au pas p d'espacement des pistes, tandis que les têtes excitées de la seconde série Y₁ à Y_{n + 1} forment, sur cette surface, des points magnétisés PM2 de taille relativement petite, c'est-à-dire des points dont la dimension est inférieure à ce pas d'espacement.

Dans un mode de réalisation plus particulièrement avantageux de l'invention qui est illustré par la figure 2, le nombre de pistes du tambour 11 est un multiple du double du nombre n des têtes de la première série. Autrement dit, ce nombre de pistes est égal à 2 fn, f étant un nombre entier.

En outre, les têtes d'enregistrement des deux séries X₁ à Xₙ et Y₁ à Y_{n +} ₁ sont réparties régulièrement, le long du chariot 34, selon un pas d'espacement égal à fp, les têtes de la seconde série Y₁ à Y_{n + 1} étant disposées en alternance avec celles de la première série X₁ à Xₙ, chacune des têtes de cette première série se trouvant placée entre deux têtes de la seconde série. Dans l'exemple décrit, f est choisi égal à six. Etant donné que, lorsque le chariot 34 est immobilisé dans sa position limite LG, la tête X₁ se trouve en face de la ligne D₁, on voit alors que, pour ce positionnement du chariot, la tête X₂ se trouve en face de la ligne D₁₃, la tête X₃ se trouve en face de la ligne D₂₅, ..., la tête Xₙ se trouve en face de la ligne D_{12 n - 11}, et de même la tête Y₂ se trouve en face de la ligne D₇, la tête Y₃ se trouve en face de la ligne D₁₉, ..., et la tête Yₙ ₊ ₁ se trouve en face de la ligne D_{12 n - 5}. On observera que, pour cette position du chariot 34, la première tête de la seconde série, c'est-à-dire la tête Y₁, ne se trouve pas devant la surface du tambour. Lorsque le chariot 34 est immobilisé dans sa position limite LG, on peut alors, au cours d'un tour de rotation du tambour, enregistrer des informations dans les pistes centrées sur les lignes D₁, D₇, D₁₃, ... D_{12n - 5} qui sont situées en face des têtes X₁ à Xₙ et Y₂ à Y_{n + 1}. Lorsque cet enregistrement est terminé, on peut, en excitant temporairement le moteur 36, déplacer le chariot 34 d'un pas vers la droite, de manière à amener les têtes X₁, X₂, X₃, ..., Xₙ, Y₂, Y₃, ..., Y_{n + 1} en face, respectivement, des lignes D₂, D₁₄, D₂₆, ..., D_{12n - 10}, D₈, D₂₀, ..., D_{12n - 4}, et permettre ainsi au cours d'un autre tour de rotation du tambour 11, l'enregistrement d'autres informations dans les pistes centrées sur ces nouvelles lignes. On comprend, dans ces conditions, que l'enregistrement d'une image latente magnétique formée de points magnétisés répartis sur les différentes lignes D₁ à D₁₂ₙ du tambour s'effectue au cours de plusieurs tours de rotation de ce tambour. C'est ainsi que, dans le cas où on n'exciterait sélectivement que les têtes de la seconde série Y₁ à Y_{n + 1}, cet enregistrement nécessiterait, pour être réalisé, douze tours complets de rotation du tambour 11. Etant donné que les points magnétisés PM2 qui sont formés par ces têtes ont une dimension inférieure au pas p d'espacement des pistes, ces points magnétisés ne peuvent se chevaucher.

Si, maintenant, pour obtenir une image latente magnétique sur le tambour, on n'excite sélectivement que les têtes de la première série X₁ à Xₙ, les points magnétisés PM1 formés par ces têtes risquent fortement de se chevaucher puisque leur dimension est supérieure au pas d'espacement des pistes. C'est pourquoi, pour éviter ce chevauchement, les têtes X₁ à Xₙ, lorsqu'elles sont utilisées seules, ne sont excitées sélectivement que lorsqu'elles se trouvent en face des lignes de centrage D₁, D₃, D₅, D₇, etc, ..., c'est-à-dire des lignes affectées d'un indice impair. Enfin, dans le cas où les têtes X₁ à Xₙ sont utilisées en même temps que les têtes Y₁ à Y_{n + 1} l'excitation de toutes ces têtes est commandée de telle sorte que les points magnétisés de grande taille et de petite taille qui sont ainsi formés n'interfèrent pas entre eux. En conséquence, on pourra utiliser le dispositif d'enregistrement qui est représenté sur la figure 2 selon plusieurs modes de fonctionnement différents, à savoir :
- un premier mode dans lequel on n'excite seulement sélectivement que les têtes X₁ à Xₙ et dans lequel la formation de l'image latente magnétique est réalisée au cours de six tours de rotation du tambour 11,
- un deuxième mode dans lequel on n'excite seulement sélectivement que les têtes Y₁ à Y_{n + 1} et dans lequel la formation de l'image latente magnétique est réalisée au cours de douze tours de rotation du tambour 11,
- un troisième mode dans lequel on excite sélectivement toutes les têtes, avec cependant la restriction indiquée ci-dessous concernant l'excitation des têtes X₁ à Xₙ et Y₁ à Y_{n + 1}, et dans lequel la formation de l'image latente magnétique est réalisée au cours de douze tours de rotation du tambour 11.

D'autres modes sont également possibles, mais sont, néanmoins, beaucoup moins intéressants et, pour cette raison, ne seront pas décrits.

Afin de permettre à la machine représentée sur les figures 1 et 2 de fonctionner selon l'un quelconque de ces modes, cette machine est équipée d'une unité 40 de commande d'activation des têtes, qui a été représentée sur la figure 1 et dont la structure de détail est montrée sur les figures 3A à 3D, assemblées comme l'indique la figure 3, et sur les figures 4A à 4D, assemblées comme l'indique la figure 4. Avant de décrire cette structure, il y a lieu de mentionner que cette unité 40 comporte trois cellules photoélectriques PH1, PH2, et PH3 (figures 2, 4A et 4B) qui, comme le montre la figure 2, sont fixées sur la plaque de support 31, de manière à recevoir chacune un faisceau lumineux émis par l'une correspondante de trois sources lumineuses S1, S2 et S3. Un disque horloge D, fixé sur l'arbre 13 du tambour 11, est pourvu d'une fente qui laisse passer, pendant un bref instant, le faisceau lumineux envoyé par la source S3 vers la cellule PH3. Chaque fois que cette fente laisse passer ce faisceau, c'est-à-dire chaque fois que le tambour 11 a accompli un tour, la cellule PH3 délivre à sa sortie, pendant un court instant, une tension électrique positive, cette tension étant appliquée à l'entrée d'un amplificateur-dériveur AD3 (figure 4C). Cet amplificateur-dériveur AD3 est conçu pour délivrer une seule impulsion électrique à sa sortie chaque fois que son entrée est portée à un potentiel positif, c'est-à-dire chaque fois que le tambour 11 a effectué un tour. Le disque horloge D est pourvu en outre de deux séries de fentes qui permettent de laisser passer, à certains moments, les faisceaux lumineux envoyés par les sources S1 et S2 vers les cellules PH1 et PH2, les fentes de ces deux séries étant réparties de telle sorte que, d'une part, la cellule PH2 délivre à sa sortie, pendant un court instant, une tension électrique positive chaque fois que la surface cylindrique du tambour 11 s'est déplacée, au cours de sa rotation, d'une distance égale au pas p d'espacement des lignes de centrage, et que, d'autre part, la cellule PH1 délivre à sa sortie, pendant un court instant, une tension électrique positive chaque fois que cette surface cylindrique s'est déplacée d'une distance égale au double de ce pas p.

Les tensions électriques ainsi générées par les cellules PH1 et PH2 sont appliquées, respectivement, à chacune des entrées de deux amplificateurs-dériveurs AD1 et AD2 qui, étant du même type que l'amplificateur-dériveur AD3, délivrent chacun une impulsion électrique à leur sortie respective chaque fois que leur entrée est portée à un potentiel positif.

On va maintenant décrire, en se référant aux figures 3A à 3D et 4A à 4D, la structure détaillée de l'unité de commande d'activation 40, cette structure étant représentée, sur ces figures, sous forme d'un schéma logique. Sur ce schéma, les demi-cercles avec un signe + représentent des circuits logiques "OU", les demi-cercles avec un point représentent des circuits logiques "ET", les demi-cercles sans signe ou point représentent des circuits logiques "mélangeurs" et les triangles représentent des circuits de commande. Ces circuits de type connu, sont analogues à ceux qui ont été décrits et représentés notamment dans les brevets français N° 1.342.787 et 1. 387.085 déposés par la Compagnie des Machines Bull, respectivement le 24 juillet 1962 et le 28 octobre 1963. On rappellera simplement que chaque circuit de commande comporte deux entrées dont l'une, marquée d'un point sur les figures, est une entrée conditionnée sur laquelle sont appliquées les impulsions à transmettre, et dont l'autre est une entrée de conditionnement sur laquelle une tension électrique est appliquée. On rappelle également que chaque circuit de commande ne transmet une impulsion appliquée à son entrée conditionnée que si son entrée de conditionnement se trouve à un potentiel positif.

Sur les figures 3A à 3D et 4A à 4D, des éléments bistables, dénommés communément basculeurs, ont été également représentés. On rappelle que chaque basculeur, tel que le basculeur BCP par exemple qui est représenté sur la figure 3C, comporte une entrée dite "normale", une entrée dite "complémentaire", une sortie "normale" et une sortie "complémentaire", et qu'il passe ou reste à l'état "1" chaque fois qu'il reçoit une impulsion par son entrée "normale" et à l'état "0" chaque fois qu'il reçoit une impulsion par son entrée "complémentaire".

Si on se réfère aux figures 3A à 3D, on voit que l'unité de commande d'activation 40 comprend une première série de blocs de mémorisation comportant f (c'est-à-dire ici six) blocs de mémorisation M1, M3, M5, M7, M9 et M11 dont trois seulement M1, M3 et M11 ont été représentés sur la figure 3B, et une deuxième série de blocs de mémorisation comportant 2f (c'est-à-dire ici douze) blocs de mémorisation désignés par les références m1 à m12, dont trois seulement m1, m2 et m12 ont été représentés sur la figure 3D.

Avant de donner des indications détaillées sur la structure de ces blocs de mémorisation, on signalera ici que chacun de ces blocs comporte une pluralité de positions d'emmagasinage, représentées par des carrés sur les figures 3B et 3D, qui sont disposées suivant k rangées horizontales et n colonnes verticales pour les blocs m1 à m12, ou suivant k/2 rangées horizontales et n colonnes verticales pour les blocs M1, M3, M5, M7, M9 et M11, chaque position d'emmagasinage étant établie pour contenir temporairement un bit d'information nécessaire à la commande de l'enregistrement d'un point magnétisé sur le tambour 11. Ces bits d'information proviennent d'un générateur de bits d'information 47 (figure 3C) qui les délivre en réponse à des signaux de commande envoyés par un organe de commande d'excitation 48 dont on parlera plus loin. On indiquera simplement ici que ces signaux de commande sont envoyés par cet organe 48 en réponse à la réception d'une impulsion de commande envoyée, par l'intermédiaire d'un conducteur F, par une unité de commande principale 49, et en dépendance de la décodification effectué par un registre décodeur 50, ce registre 50 ayant reçu au préalable de l'unité de commande 49 une combinaison binaire codée représentative d'un caractère à imprimer.

Les blocs de mémorisation M1, M3, M5, M7, M9, M11 et m1 à m12 qui sont représentés sur les figures 3A à 3D sont de structure connue. On considèrera que cette structure est analogue à celle de l'organe de mémorisation qui a été accessoirement décrit et représenté dans le brevet français N° 2.443.335 qui a été déposé par la Compagnie Internationale pour l'Informatique CII HONEYWELL BULL le 6 décembre 1978. Pour les détails de constitution et de fonctionnement de cette structure, on pourra se reporter utilement à ce brevet.

Il y a lieu, cependant, de mentionner que, comme on peut le voir sur la figure 6 sur laquelle le bloc de mémorisation m2 a été schématiquement représenté, ce bloc comporte kn noyaux magnétiques disposés suivant k rangées horizontales comprenant chacune n noyaux magnétiques, la première rangée comprenant les noyaux T21, T141, ... Tx1, la deuxième rangée comprenant les noyaux T22, T142, ..., Tx2, et ainsi de suite ..., la dernière rangée comprenant les noyaux T2k, T14k, ..., Txk. Chacune de ces k rangées de noyaux est traversée respectivement par l'un de k conducteurs L1, L2, ..., Lk. Tous ces noyaux sont disposés en outre suivant n colonnes verticales, la première colonne comprenant les noyaux T21, T22, ..., T2k, la deuxième colonne comprenant les noyaux T141, T142, ..., T14k, et ainsi de suite.

Chaque colonne de noyaux est traversée, d'une part par l'un de n conducteurs connectés chacun respectivement à chacune de n sorties S1, S2, ..., Sn d'une chaîne de balayage CEm2, d'autre part par l'un de n conducteurs W2, W14, ..., Wx destinés, comme on le verra plus loin à transmettre les impulsions nécessaires à l'excitation des têtes d'enregistrement. Dans l'exemple décrit, ces têtes sont utilisées pour former sur la surface du tambour des images magnétiques de caractères formés chacun d'un ensemble de points situés à l'intérieur d'une matrice comprenant w rangées horizontales et z lignes verticales avec w ≦ k et z ≦ n. On considérera que, dans l'exemple décrit, les valeurs de w et de z ont été choisies égales, respectivement, à quarante-huit et à trente-cinq. En conséquence, pour permettre de commander la formation des points constitutifs d'un même caractère, le générateur de bits 47 est pourvu de w (c'est-à-dire ici 48) sorties et il est établi, comme on le verra plus loin, pour délivrer successivement, sous le contrôle de la combinaison codée contenue dans le registre décodeur 50 et représentative de ce caractère, z (c'est-à-dire ici 35) groupes de bits, chacun de ces groupes comprenant w bits d'information.

Chacun de ces groupes de w bits est alors envoyé par ce générateur 47 sur des conducteurs B1, B2, ..., Bw qui, comme le montre la figure 3C, sont connectés aux w sorties de ce générateur, ces w bits étant destinés à être enregistrés dans l'un des blocs de mémorisation, d'une manière qui sera indiquée plus loin. Afin de permettre aux w bits d'un même groupe d'être enregistrés dans w noyaux magnétiques situés dans une même ligne verticale d'un bloc déterminé, par exemple dans les noyaux T21, T22, ..., T2w du bloc m2, les conducteurs L1 à Lk de ce bloc sont reliés sélectivement, par groupes de w conducteurs, comme le montre la figure 6, aux conducteurs B1, B2, ..., Bw, par l'intermédiaire d'un sélecteur de rangées SRm. Ce sélecteur comporte w commutateurs C1, C2, ..., Cw, à plusieurs positions, qui peuvent être actionnés simultanément de manière à être placés sur des positions identiques, ces commutateurs comprenant chacun une borne d'entrée reliée à l'un correspondant des conducteurs B1, B2, ..., Bw et un nombre N de bornes de sorties tel que l'on ait Nw = k, ces bornes de sorties étant reliées aux conducteurs L1, L2, ..., Lk de telle sorte que, lorsque ces commutateurs sont placés sur leur première position, les conducteurs B1, B2, ..., Bw sont reliés chacun respectivement à chacun des conducteurs L1, L2, ..., Lw, tandis que, lorsque ces commutateurs sont placés sur leur deuxième position, les conducteurs B1, B2, ..., Bw sont reliés chacun respectivement à chacun des w conducteurs qui sont situés à la suite des conducteurs L1, L2, ..., Lw, et ainsi de suite. Le sélecteur SRm comporte en outre deux entrées EP et EZ et il est établi de telle sorte que, lorsqu'une impulsion électrique est appliquée à son entrée EZ, les commutateurs C1, C2, ..., Cw sont amenés sur leur première position, cette position étant celle qui est montrée sur la figure 6, alors que, chaque fois qu'une impulsion électrique est appliquée à l'entrée EP, ces commutateurs sont déplacés simultanément pour être amenés sur la position suivante.

Dans le bloc de mémorisation représenté sur la figure 6 , la sélection d'une colonne de noyaux, en vue de l'enregistrement, dans w noyaux de cette colonne, des bits d'information provenant du générateur 47 et transmis par les conducteurs B1, B2, ..., Bw, est réalisée par la chaîne de balayage CEm2.

Cette chaîne, de structure connue, comporte deux entrées FP et FZ et elle est établie pour délivrer une impulsion électrique sur l'une seulement de ses sorties S1, S2, ..., Sn, chaque fois qu'elle reçoit, par son entrée FP, une impulsion électrique provenant de l'organe de commande d'excitation 48 et transmise, comme le montrent les figures 3C et 3D, par l'un quelconque de trois circuits de commande K1, K2 et K3, l'impulsion transmise par l'un de ces circuits étant envoyée vers cette entrée FP par l'intermédiaire d'un circuit mélangeur G1 et d'un répartiteur d'impulsions Rlm dont on parlera plus loin.

En réponse à l'impulsion qui est ainsi appliquée à son entrée FP, la chaîne CEm2 délivre une impulsion sur l'une seulement de ses sorties S1 à Sn, puis progresse d'un pas, si bien que, lorsque cette chaîne reçoit ensuite une autre impulsion par son entrée FP, elle délivre une impulsion sur sa sortie suivante, puis progresse à nouveau d'un pas, et ainsi de suite. La chaîne CEm2 est établie en outre de telle sorte que, lorsqu'elle reçoit une impulsion par son entrée FZ et qu'elle reçoit ensuite une impulsion par son entrée FP, elle délivre une impulsion sur sa sortie S1 et progresse ensuite d'un pas.

La figure 6 montre encore que chacune des k rangées horizontales de noyaux magnétiques du bloc de mémorisation m2 est traversée respectivement, non seulement par l'un des k conducteurs L1 à Lk, mais également par l'un de k conducteurs connectés aux sorties A1, A2, ..., Ak d'une autre chaîne de balayage CLm2. Cette autre chaîne CLm2, qui est de structure analogue à celle de la chaîne CEm2, comporte une entrée AP connectée à la sortie d'un circuit de commande Km8 et elle est établie de telle sorte que, lorsqu'elle reçoit une première impulsion transmise par ce circuit Km8, elle délivre une impulsion sur sa première sortie A1, ce qui a pour effet de provoquer l'extraction des bits d'information qui ont été enregistrés dans la première rangée de noyaux du bloc m2, c'est-à-dire dans les noyaux T21, T141, ..., Tx1, cette extraction s'effectuant sous la forme d'impulsions qui sont envoyées vers les têtes Y1 à Yn, par l'intermédiaire des conducteurs W2, W14, ..., Wx.

Lorsque cette chaîne CLm2 reçoit ensuite sur son entrée AP une deuxième impulsion transmise par le circuit Km8, elle délivre une impulsion sur sa deuxième sortie A2, ce qui a pour effet de provoquer l'extraction des bits d'information qui ont été enregistrés dans la deuxième rangée de noyaux du bloc m2. On comprend, dans ces conditions, que l'extraction de tous les bits d'information contenus dans le bloc m2 prend fin lorsque, en réponse à la réception d'une k ième impulsion appliquée à son entrée AP, la chaîne CLm2 a délivré une k ième impulsion sur sa dernière sortie Ak.

On ne donnera pas de détails sur la structure des autres blocs de mémorisation m1 et m3 à m12, ni sur la structure des chaînes de balayage qui sont associés à ces blocs pour la raison que ces structures sont analogues à celles du bloc m2 et des chaînes CEm2 et CLm2 qui viennent d'être décrites. On ne donnera pas non plus de détails sur la structure des blocs M1, M3, M5, M7, M9 et M11, ainsi que des chaînes de balayage, telles que CEM1 (figure 3B) et CLM1 (figure 4A) qui sont associées à ces blocs, pour la raison que ces structures sont similaires à celles du bloc m2 et des chaînes CEm2 et CLm2, avec toutefois cette différence que le nombre g de rangées horizontales de noyaux magnétiques de chacun de ces six blocs est égal à la moitié de celui k des rangées horizontales de noyaux du bloc m2.

Il faut d'ailleurs signaler que, comme on le verra aussi plus loin, les blocs de mémorisation M1, M3, M5, M7, M9 et M11 sont destinés à enregistrer, non pas les w bits d'information de chacun des groupes de bits qui sont envoyés par le générateur de bits 47, mais seulement la moitié, à raison d'un bit sur deux, des bits de chacun de ces groupes, c'est-à-dire w/2 bits d'information par groupe. Afin de permettre aux w/2 bits d'un même groupe d'être enregistrés dans w/2 noyaux situés dans une même colonne de l'un de ces six blocs, les conducteurs L1, L3, L5, ..., Lg de chacun de ces blocs sont reliés sélectivement, comme on peut le comprendre en se référant aux figures 3A, 3B et 3C par groupes de w/2 conducteurs, aux conducteurs B1, B3, B5, ..., (c'est-à-dire aux conducteurs B affectés d'un indice impair) par l'intermédiaire d'un sélecteur de rangées SRM.

La sélection d'une colonne, en vue de l'enregistrement de ces w/2 bits dans w/2 noyaux de cette colonne, est réalisée par celle des six chaînes de balayage CEM1, CEM3, CEM5, CEM7, CEM9 et CEM11 qui est associée au bloc de mémorisation concerné par cet enregistrement. Chacune de ces six chaînes délivre une impulsion sur l'une seulement de ses n sorties, en réponse à une impulsion provenant de l'organe de commande d'excitation 48 et transmise successivement, comme le montrent les figures 3A, 3B et 3C, soit par un circuit de commande K2, soit par un circuit de commande K4, puis par un circuit mélangeur G2 et enfin par un répartiteur d'impulsions RIM. Le répartiteur d'impulsions RIM a une structure similaire à celle des chaînes de balayage CEM1, CEM3, CEM5, CEM7, CEM9, CEM11 et CEm1 à CEm12. Ce répartiteur RIM comporte une entrée FP sur laquelle sont appliquées les impulsions qui ont été transmises par le circuit de commande K2 ou le circuit de commande K4, et six sorties Z1, Z3, Z5, Z7, Z9 et Z11 qui sont connectées chacune respectivement à l'entrée FP de chacune des chaînes de balayage CEM1, CEM3, CEM5, CEM7, CEM9 et CEM11. Ce répartiteur RIM comporte également une entrée FZ et il est établi, tout comme les chaînes de balayage, de telle sorte que, lorsqu' il reçoit une impulsion par cette entrée FZ et qu'il reçoit ensuite une impulsion par son entrée FP, il délivre une impulsion sur sa sortie Z1 et progresse ensuite d'un pas. Puis, en réponse à une deuxième impulsion appliquée à son entrée FP, il délivre une impulsion sur sa sortie Z2 et progresse à nouveau d'un pas, et ainsi de suite.

Le répartiteur d'impulsions RIm, dont on a parlé plus haut, présente une structure analogue à celle du répartiteur RIM, à cette différence qu'il comporte douze sorties Z1 à Z2, Z3, ..., Z12 qui sont connectées chacune respectivement à l'entrée FP de chacune des chaînes de balayage CEm1 à CEm12.

Ainsi qu'on peut le voir sur les figures 3A à 3D et 4A à 4D, les colonnes de noyaux des différents blocs de mémorisation sont désignées par la lettre D suivie d'un chiffre correspondant à l'ordre dans lequel se succèdent les différentes lignes de centrage du tambour. Compte-tenu du mode de répartition des têtes d'enregistrement, ces colonnes D1, D2, D3, etc ... ne sont pas contigües les unes aux autres, mais réparties parmi les blocs de telle sorte, que pour un même bloc, on passe de la référence d'une colonne à la référence de la colonne suivante en ajoutant douze au chiffre de cette référence. C'est ainsi que les blocs M1 et m1 comprennent les colonnes D1, D13, D25, ..., D(12n - 11), que le bloc m2 comprend les colonnes D2, D14, D26, ..., D(12n - 10), etc, ..., et finalement le bloc m12 comprend les colonnes D12, D24, D36, ..., D12n.

On peut voir encore, sur les figures 3A à 3D, que la transmission des bits qui sont délivrés par le générateur de bits 47 est contrôlée par trois portes PRT1, PRT2 et PRT3, la porte PRT1 autorisant ou non la transmission des bits envoyés, vers le sélecteur SRM, sur les conducteurs B1, B3, B5, etc, ..., la porte PRT3 autorisant on non la transmission des bits envoyés, vers le sélecteur SRm, sur les conducteurs B2, B4, B6, etc, ... et la porte PRT2 autorisant ou non la transmission des bits envoyés, vers le sélecteur SRm, sur les conducteurs B1, B2, B3, B4, etc ...

On va maintenant décrire la manière dont s'effectue l'enregistrement, dans les blocs de mémorisation de l'unité de commande d'activation 40, des bits d'information qui sont délivrés par le générateur de bits 47, en réponse à la décodification des combinaisons codées représentatives des caractères à imprimer et compte-tenu du mode de fonctionnement du dispositif d'enregistrement qui a été choisi par l'opérateur. A cet effet, il faut signaler que ce mode de fonctionnement est déterminé par la position occupée par deux contacts manuels CM1 et CM2 (figures 3A et 4A), le positionnement de ces deux contacts étant effectué par l'opérateur avant de commander le déclenchement du fonctionnement de l'unité de commande principale 49.

Ainsi qu'on le voit sur la figure 3A, le contact CM1 comporte une borne d'entrée connectée à la borne positive (+) d'une source de courant continu, et une lame mobile qui peut être placée sur l'une ou l'autre de deux bornes de sortie SR et DR, selon que l'opérateur désire que l'enregistrement des images latentes sur le tambour 11 s'effectue en six tours de rotation du tambour (SR) ou en douze tours de rotation (DR) de ce tambour. Le contact CM2 comporte une borne d'entrée qui est connectée à la borne positive (+) de la source de courant, et une lame mobile qui peut être placée sur l'une ou l'autre de deux bornes de sortie PT et GT, selon que l'opérateur désire que les points magnétisés utilisés pour la constitution de ces images soient de petite taille (PT) ou de grande taille (GT). La figure 3A montre que trois circuits "ET" E1, E2 et E3 sont connectés sur les bornes de sortie de ces deux contacts CM1 et CM2, de telle sorte que lorsque les lames mobiles de ces contacts sont placées sur les bornes DR et GT, une tension positive apparaît à la sortie du circuit E1 et appliquée, d'une part à l'entrée de conditionnement des deux circuits de commande K2 et K3 (figure 3C) qui deviennent alors passants, d'autre part à l'une des entrées de deux circuits "ET" E4 et E5, chacun de ces deux circuits "ET" comportant deux entrées. Lorsque les lames mobiles des contacts CM1 et CM2 sont placées sur les bornes SR et GT, une tension positive apparaît à la sortie du circuit E2 et est appliquée, d'une part, par l'intermédiaire d'un circuit "OU" U1, à la porte PRT1, d'autre part à l'entrée de conditionnement du circuit de commande K4 qui devient, alors passant. Lorsque les lames mobiles des contacts CM1 et CM2 sont placées sur les bornes DR et PT, une tension positive apparaît à la sortie du circuit E3 et est appliquée, d'une part, par l'intermédiaire d'un circuit "OU" U2, à la porte PRT2, d'autre part à l'entrée de conditionnement du circuit de commande K1 qui devient alors passant.

On peut voir par ailleurs, sur les figures 3A et 4A que, la borne SR est connectée, par ailleurs, à l'entrée de conditionnement de chacun de deux circuits de commande K9 et K11 dont il sera question plus loin, que la borne DR est connectée, par ailleurs, à l'une des deux entrées d'un circuit "ET" E7 et que la borne GT est connectée, par ailleurs, à l'une des deux entrées d'un circuit "ET" E6.

On va d'abord considérer ce qui se passe dans le cas où, pour permettre au dispositif d'enregistrement de fonctionner selon le troisième mode indiqué plus haut, la lame mobile du contact CM1 a été positionnée sur la borne DR et la lame mobile du contact CM2 a été placée sur la borne GT. Dans ce cas, ainsi qu'on l'a vu ci-dessus, aucune tension positive n'apparaît à la sortie des circuits E2 et E3 et, par conséquent les circuits K4 et K1 qui sont connectés, respectivement, aux sorties de ces circuits E2 et E3 sont non-passants. Au contraire, une tension positive apparaît à la sortie du circuit E1 et est appliquée, d'une part à l'une des entrées des circuits E4 et E5, d'autre part aux circuits K2 et K3 qui deviennent alors passants. Par ailleurs, la tension positive délivrée par la borne DR est appliquée, à l'une des entrées du circuit E7, et la tension positive délivrée par la borne GT est appliquée sur l'une des entrées du circuit E6.

Les opérations d'enregistrement sont d'abord précédées par l'envoi, par l'unité de commande 49, d'une impulsion sur un conducteur Z (figure 3C), cette impulsion étant ainsi appliquée, comme on le voit sur les figures 3A à 3D, d'une part sur les entrées EZ des sélecteurs de rangées SRM et SRm, d'autre part sur les entrées FZ des répartiteurs d'impulsions RIM et RIm et les entrées FZ de toutes les chaînes de balayage. Dans ces conditions, en réponse à la première impulsion qui sera ultérieurement appliquée à l'entrée FP du répartiteur RIM, ce répartiteur délivrera une impulsion sur sa sortie Z1 et l'appliquera à l'entrée FP de la chaîne CEM1. En réponse à cette impulsion, la chaîne CEM1 délivrera une impulsion sur sa sortie S1, sélectionnant ainsi la première colonne de noyaux du bloc M1, c'est-à-dire la colonne D1. Par ailleurs, par suite du positionnement du sélecteur de rangées SRM, les w/2 premières rangées L1, L3, L5, etc, ... , du bloc M1 se trouvent reliées aux w/2 conducteurs B1, B3, B5, B7, etc, ..., qui, comme le montre la figure 3C, sont contrôlés par la porte PRT1, de sorte que si, au moment de l'envoi des bits d'informations par le générateur 47, cette porte est passante, les bits véhiculés par les conducteurs B1, B3, B5, B7, etc ..., viendront s'enregistrer dans les w/2 noyaux qui, dans le bloc M1, sont situés à l'intersection de la colonne D11 et des rangées L1, L3, L5, etc, ... D'une manière analogue, par suite du positionnement du répartiteur RIm, des chaînes CEm1 à CEm12 et du sélecteur SRm, la première colonne D1 de noyaux du bloc m1 se trouve sélectionnée et, si la porte PRT3 (figure 3C) chargée de contrôler les impulsions envoyées sur les conducteurs B2, B4, B6, B8, etc, ... est rendue passante, les bits d'information véhiculés par ces conducteurs viendront s'enregistrer dans les w/2 noyaux qui, dans le bloc m1, sont situés à l'intersection de la colonne D1 et des rangées L2, L4, L6, etc, ... Si cette porte PRT 3 n'est pas passante, mais que la porte PRT2, qui contrôle les impulsions envoyées sur tous les conducteurs B1 à Bw, est passante, les w bits d'information véhiculés par ces conducteurs B2 à Bw viendront s'enregistrer dans les w noyaux qui, dans le bloc m1, sont situés à l'intersection de la colonne D1 et des rangées L1, L2, L3, ..., Lw.

Ainsi qu'on peut le voir sur la figure 3C, l'impulsion qui est envoyée par l'unité de commande 49 sur le conducteur Z est appliquée, en outre, par l'intermédiaire d'un circuit mélangeur G3, à l'entrée normale du basculeur BCP. Dans ces conditions, la basculeur BCP passe à l'état "1" et la tension positive qui apparaît à sa sortie normale est appliquée à l'autre entrée du circuit E4. Il faut signaler par ailleurs que l'impulsion qui est envoyée sur le conducteur Z est appliquée également (ce qui n'a pas été représenté sur les figures pour des raisons de simplification) sur les entrées complémentaires des autres basculeurs qui ont été représentés sur les figures 4A à 4D, ce qui a pour effet de mettre ces autres basculeurs à l'état "0", pour le cas éventuel où ces basculeurs ne se trouveraient pas dans cet état.

Du fait que les deux entrées du circuit E4 sont maintenant portées à un potentiel positif, une tension positive apparaît à la sortie de ce circuit E4 et est appliquée, d'une part à la porte PRT3 qui devient ainsi passante, d'autre part, par l'intermédiaire du circuit U1, àla porte PRT1 qui devient également passante.

Les opérations d'enregistrement débutent alors par l'envoi par l'unité de commande 49, vers le registre-décodeur 50, d'une combinaison codée binaire représentative d'un premier caractère à imprimer. Ce registre-décodeur, qui est analogue à celui qui est décrit et représenté dans le brevet français précité N° 2.443.335,possède comme on le voit sur la figure 5, autant de sorties, telles que celles qui sont désignées par SA, SB, SC et SZ sur cette figure, qu'il y a de types possibles de caractères à imprimer. On considèrera que le nombre de ces types possibles est égal à t et que, de ce fait, ce registre-décodeur possède t sorties. Ce registre-décodeur est établi pour porter l'une de ses t sorties à un potentiel positif chaque fois qu'il reçoit une combinaison codée provenant de l'unité de commande 49, cette sortie étant celle qui correspond au caractère représenté par cette combinaison. Ainsi, par exemple, si la combinaison codée contenue dans ce registre-décodeur représente conventionnellement le caractère A, la sortie de ce registre qui est porté à un potentiel positif est la sortie SA. De même, si cette combinaison codée représente conventionnellement le caractère B, la sortie qui est portée à un potentiel positif est la sortie SB, et ainsi de suite. A chacune des sorties du registre-décodeur 50 est connecté un groupe formé de trente-cinq circuits de commande. Toutefois, pour des raisons de simplification, on n'a représenté sur la figure 5, que quelques-uns des trente-cinq circuits KA1 à KA35 qui sont connectés à la sortie SA, ainsi que deux (KB1 et KB2) des trente-cinq circuits de commande qui sont connectés à la sortie SB. Les impulsions qui sont appliquées aux entrées conditionnées de ces circuits de commande proviennent d'une ligne à retard 39, à quarante-huit prises médianes, qui, à partir d'une impulsion envoyée par l'unité de commande 49 et appliquée à son entrée par l'intermédiaire d'un conducteur F, produit une série de quarante-huit impulsions décalées dans le temps, la première de ces impulsions étant envoyée, par l'intermédiaire d'un conducteur F1, vers les circuits KA1, KB1, etc, ..., la seconde de ces impulsions étant envoyée, par l'intermédiaire d'un conducteur F2, vers les circuits KA2, KB2, etc, ..., et ainsi de suite pour les trente-trois autres impulsions. Les impulsions suivantes qui sont envoyées par l'intermédiaire de treize conducteurs F36 à F48, servent, comme on le verra plus loin, à assurer les espacements nécessaires entre les caractères imprimés. Etant donné que le registre-décodeur 50 possède t sorties, il y a donc en tout t groupes de circuits de commande qui sont connectés à ces sorties, chaque groupe comportant trente-cinq circuits de commande. Il faut signaler que le générateur de bits 47 possède 35 t entrées qui sont reliées chacune respectivement à chacun de ces 35 t circuits de commande. Par ailleurs, le générateur de bits 47 possède w sorties et est constitué, dans l'exemple décrit, par une mémoire plane, du type décrit dans le brevet français N° 1.333.920, cette mémoire contenant des mots comportant chacun w bits, chacun de ces mots pouvant être sélectivemnt extrait, sans effacement, de cette mémoire, en réponse à une impulsion appliquée à l'une de ses 35 t entrées.

Dès que la combinaison codée représentative d'un caractère a été enregistrée dans le registre-décodeur 50, l'unité de commande 49 envoie, par l'intermédiaire du conducteur F, une impulsion à la ligne à retard 39. On considèrera, à titre d'exemple, que cette combinaison codée est celle du caractère B. Dans ce cas, la sortie du registre-décodeur 50 qui est portée à un potentiel positif est la sortie SB et, par suite, les circuits KB1 à KB 35 qui sont connectés sur cette sortie sont rendus passants. En réponse à l'impulsion qui est appliquée à son entrée, la ligne à retard 39 délivre une série de quarante-huit impulsions.

La première de ces impulsions, qui est envoyée sur le conducteur F1, est appliquée, d'une part sur les entrées conditionnées des circuits KA1, KB2, etc, ..., d'autre part, par l'intermédiaire d'un circuit mélangeur G4, sur les entrées conditionnées des circuits K2 et K4.

Cette même impulsion est appliquée en outre, par l'intermédiaire d'un circuit mélangeur G5, sur l'entrée conditionnée du circuit K1. Etant donné que, comme on l'a indiqué plus haut, les circuits KB1 et K2 sont passants, cette impulsion est transmise par ces deux circuits et est bloquée par les circuits K4 et K1. L'impulsion transmise par KB1 est appliquée sur l'une des 35 t entrées du générateur de bits 47. Cette application déclenche l'envoi, sous forme d'impulsions, de w bits d'informations "0" ou "1" sur les conducteurs B1 à Bw.

Etant donné que, comme on l'a indiqué plus haut, les portes PRT1 et PRT3 ont été rendues passantes, les w/2 bits d'information qui sont envoyés sur les conducteurs impairs B1, B3, B5, B7, etc, ..., sont, comme on le voit sur les figures 3A à 3D, transmis par la porte PRT1 et envoyés vers le sélecteur de rangées SRM qui les applique alors sur les w/2 premiers conducteurs L1, L3, L5, etc ... qui sont connectés sur les sorties de ce sélecteur. De même, les w/2 bits d'information qui sont envoyés sur les conducteurs pairs B2, B4, B6, B8, etc, ..., sont transmis par la porte PRT3 et envoyés vers le sélecteur de rangées SRm qui les applique alors sur les w/2 premiers conducteurs pairs L2, L4, L6, etc ... qui sont connectés sur les sorties de ce sélecteur. Par ailleurs, l'impulsion qui est transmise par le circuit K2 est appliquée, d'une part à l'entrée complémentaire du basculeur BCP qui passe alors à l'état "0", d'autre part, par l'intermédiaire du mélangeur G2, à l'entrée FP du répartiteur d'impulsions RIM. L'impulsion transmise par K2 est appliquée en outre, par l'intermédiaire du mélangeur G1, à l'entrée FP du répartiteur d'impulsions RIM. Dans ces conditions, ainsi qu'on l'a expliqué en détail plus haut, le répartiteur RIM délivre une impulsion sur sa sortie Z1 et l'applique à l'entrée FP de la chaîne CEM1, ce qui a pour effet de provoquer l'enregistrement des bits véhiculés par les conducteurs L1, L3, L5, etc ... dans les w/2 noyaux qui, dans le bloc M1, sont situés à l'intersection de ces conducteurs et de la colonne D1. Après quoi, le répartiteur RIM et la chaîne CEM1 progressent tous les deux pas, si bien que la prochaine impulsion qui sera appliquée sur l'entrée FP du répartiteur aura pour effet de provoquer l'envoi, par ce répartiteur, d'une impulsion sur sa sortie Z3, cette dernière impulsion étant ainsi appliquée sur l'entrée FP de la chaîne CEM3.

De la même façon, en réponse à l'impulsion qui est appliquée à son entrée FP, le répartiteur RIm délivre une impulsion sur sa sortie Z1 et l'applique à l'entrée FP de la chaîne CEm1, ce qui a pour effet de provoquer l'enregistrement des bits véhiculés par le conducteurs L2, L4, L6, etc ... dans les w/2 noyaux qui, dans le bloc m1, sont situés à l'intersection de ces conducteurs et de la colonne D1. Après quoi, le répartiteur RIm et la chaîne CEm1 progressent tous les deux d'un pas, si bien que la prochaine impulsion qui sera appliquée sur l'entrée FP de ce répartiteur RIm aura pour effet de provoquer l'envoi, par ce répartiteur, d'une impulsion sur sa sortie Z2, cette impulsion étant ainsi apliquée sur l'entrée FP de la chaîne CEm2.

Le basculement à l'état "0" du basculeur BCP se produit juste après que les bits d'information qui ont été envoyés par le générateur de bits 47 aient été transmis par les portes PRT1 et PRT3. Du fait de ce basculement, une tension positive apparaît à la sortie complémentaire de ce basculeur. Par suite, la sortie du circuit E4 cesse d'être portée à un potentiel positif, ce qui rend alors non-passantes les portes PRT1 et PRT3. Au contraire, la sortie du circuit E5 se trouve maintenant portée à une tension positive. Cette tension positive est appliquée, par l'intermédiaire du circuit U2, à la porte PRT2 qui devient ainsi passante.

Si on revient maintenant à la figure 5, on voit que la deuxième impulsion qui est envoyée sur le conducteur F2 par la ligne à retard 39, est appliquée, d'une part sur les entrées conditionnées des circuits KA2, KB2, etc ..., d'autre part, par l'intermédiaire d'un circuit mélangeur G6, à l'entrée conditionnée du circuit K3. Cette même impulsion est appliquée en outre, par l'intermédiaire de G5, sur l'entrée conditionnée du circuit K1.

Etant donné que les circuits KB2 et K3 sont passants, cette impulsion est transmise par ces circuits et est bloquée par le circuit K1. L'impulsion transmise par KB2 est appliquée sur l'une des entrées du générateur de bits 47, ce qui déclenche l'envoi, par ce générateur, de w bits d'information "0" ou "1" sur les conducteurs B1 à Bw.

Etant donné que la porte PRT2 (figure 3C) est passante, ces w bits sont transmis par cette porte et envoyés vers le sélecteur de rangées SRm qui les applique alors sur les w premiers conducteurs L1 à Lw qui sont connectés aux sorties de ce sélecteur. Par ailleurs, l'impulsion qui est transmise par le circuit K3 est appliquée, d'une part, par l'intermédiaire du mélangeur G3, à l'entrée normale du basculeur BCP qui repasse alors à l'état "1", d'autre part, par l'intermédiaire du mélangeur G2, à l'entrée FP du répartiteur d'impulsions RIm. Dans ces conditions, ainsi qu'on l'a expliqué en détail plus haut, le répartiteur RIm délivre une impulsion sur sa sortie Z2 et progresse ensuite d'un pas. L'impulsion délivrée à la sortie Z2 et appliquée à l'entrée FP de la chaîne CEm2, ce qui a pour effet de provoquer l'enregistrement des w bits véhiculés par les conducteurs L1 à Lw dans les w noyaux qui, dans le bloc m2, sont situés à l'intersection de ces conducteurs et de la colonne D2.

L'enregistrement des bits d'information délivrés par le générateur 47, en réponse aux impulsions qui sont envoyés par la ligne à retard 39 sur les autres conducteurs F3 à F35, s'effectue d'une manière analogue à celle qui vient d'être décrite. C'est pourquoi, on n'insistera pas davantage sur le détail de ces opérations d'enregistrement.

Cependant, en raisonnant de la façon qui a été indiquée ci-dessus, on verra que les w/2 bits qui, en réponse à l'impulsion envoyée sur F3, sont appliqués sur les conducteurs L1, L3, L5, etc ... connectés aux sorties du sélecteur SRM, se trouvent enregistrés dans les w/2 noyaux qui, dans le bloc M3, sont situés à l'intersection de ces conducteurs et de la colonne D3, et que les w/2 bits qui, en réponse à cette impulsion envoyée sur F3, sont appliqués sur les conducteurs L2, L4, L6, etc ... connectés aux sorties du sélecteur SRm, se trouvent enregistrés dans les w/2 noyaux qui, dans le bloc m3, sont situés à l'intersection de ces conducteurs et de la colonne D3. De même, les w bits qui, en réponse à l'impulsion envoyée sur F4, sont appliqués sur les conducteurs L1 à Lw connectés aux sorties du sélecteur SRm, se trouvent enregistrés dans les w noyaux qui, dans le bloc m4, sont situés à l'intersection de ces conducteurs et de la colonne D4, et ainsi de suite.

En définitive, on voit que les trente-cinq groupes de w bits qui, en réponse aux impulsions envoyées sur les conducteurs F1 à F35, sont délivrés par le générateur de bits 47 sont enregistrés successivement, dans les colonnes D1 des blocs M1 et m1, dans la colonne D2 du bloc m2, dans les colonnes D3 des blocs M3 et m3, dans la colonne D4 du bloc m4, dans les colonnes D5 des blocs M5 et m5, dans la colonne D6 du bloc m6, et ainsi de suite, les bits du trente-cinquième groupe étant enregistrés dans les colonnes D35 des blocs M11 et m11. Ces trente-cinq groupes de bits sont destinés à commander la formation de points magnétisés répartis suivant la configuration du caractère B. Lorsque l'enregistremnt de ces groupes est terminé, les impulsions qui sont envoyées par la ligne à retard 39 sur les conducteurs F36 à F48 sont envoyées vers les répartiteurs et les chaînes de balayage afin de les faire progresser et d'assurer ainsi l'espacement nécessaire entre ce caractère B et le caractère suivant. Dans ces conditions, les colonnes D36 à D48 des blocs de mémorisation ne servent pas pour l'enregistrement des bits délivrés par le générateur de bits 47. Après quoi, l'unité de commande 49 envoie au registre-décodeur 50 une deuxième combinaison codée représentative d'un deuxième caractère destiné à être imprimé sur la même ligne de caractères que le premier, puis elle envoie, par l'intermédiaire du conducteur F, une impulsion à l'organe de commande d'excitation 48.

Cette impulsion déclenche l'envoi, par le générateur de bits, de trente-cinq groupes de w bits destinés à former la configuration de ce deuxième caractère, ces groupes de bits venant s'enregistrer dans les trente-cinq colonnes D49 à D83 des blocs de mémorisation. Puis, à la fin de cet enregistrement, la progression des répartiteurs et des chaînes de balayage est commandée afin d'assurer la formation de l'espace suivant.

L'enregistrement, dans les blocs de mémorisation, des groupes de bits destinés à former les caractères suivants se poursuit de manière analogue à celle qui a été exposée ci-dessus. A la fin de l'enregistrement dans ces blocs des groupes de bits correspondant au dernier caractère de la première ligne de caractères à imprimer, l'unité de commande 49 envoie une impulsion, par l'intermédiaire d'un conducteur H, vers les sélecteurs de rangées SRM et SRm. Cette impulsion, appliquée à l'entrée EP de ces sélecteurs, a pour effet d'amener les commutateurs de ces sélecteurs sur leur deuxième position, afin de permettre aux groupes de bits correspondant aux caractères de la deuxième ligne de caractères d'être enregistrés dans les noyaux qui, dans les blocs m1 à m12, sont traversés par les w conducteurs situés à la suite des conducteurs L1 à Lw, ainsi que dans les noyaux qui, dans les blocs M1, M3, M5, M7, M9 et M11, sont traversés par les w/2 conducteurs situés à la suite des w/2 premiers conducteurs L1, L3, L5, etc ... Après quoi, l'unité de commande 49 commande l'enregistrement, dans les blocs de mémorisation, des groupes de bits correspondant aux caractères de cette deuxième ligne, cet enregistrement s'effectuant, de la même manière que celle qui a été décrite ci-dessus, au fur et à mesure de l'envoi, vers le registre-décodeur 50, des combinaisons codées représentatives de ces caractères. A la fin de cet enregistrement, l'unité de commande 49 applique une nouvelle impulsion sur les entrées EP des sélecteurs SRM et SRm afin de permettre l'enregistrement, dans les blocs de mémorisation, des groupes de bits correspondant aux caractères de la troisième ligne de caractères.

Ces opérations d'enregistrement se poursuivent jusqu' au moment où les groupes de bits correspondant au dernier caractère à imprimer ont été enregistrés dans les blocs de mémorisation. A ce moment-là, une nouvelle phase est déclenchée, au cours de laquelle les bits d'information qui ont été enregistrés dans les blocs de mémorisation vont être extraits de ces derniers afin de provoquer l'excitation sélective des têtes d'enregistrement magnétique X1 à Xn et Y1 à Y n + 1. Cette phase, qui débute par l'envoi, par l'unité de commande 49, d'une impulsion qui est ensuite appliquée à l'entrée normale d'un basculeur BFM, met en oeuvre les éléments qui sont représentés sur les figures 4A à 4D. Toutefois, avant de décrire les opérations exécutées au cours de cette phase, on va d'abord donner quelques détails relatifs à la structure de ces éléments. Si on se réfère aux figures 4A à 4D, on voit que les impulsions qui sont délivrées par l'amplificateur-dériveur AD1 sont appliquées à l'entrée conditionnée d'un circuit de commande K6. Ce circuit K6, s'il est rendu passant, transmet les impulsions qu'il reçoit ainsi et les applique sur les entrées conditionnées de six circuits de commande KM1, KM3, KM5, KM7, KM9 et KM11, les entrées de conditionnement de ces six circuits étant connectées chacune respectivement à chacune des sorties de six circuits "OU" U11, U12, U13, U14, U15 et U16, chacun de ces circuits "OU" comportant deux entrées reliées à deux des douze sorties N1 à N12 d'un compteur d'impulsions CIM, de telle sorte que les sorties N1 et N2 se trouvent reliées aux entrées du circuit U11, les sorties N3 et N4 se trouvent reliées aux entrées du circuit U12, et ainsi de suite pour les autres sorties du compteur CIM.

Les sorties des six circuits de commande KM1, KM3, KM5, KM7, KM9 et KM11 sont connectées chacune respectivement à chacune des entrées AP des six chaînes de balayage CLM1, CLM3, CLM5, CLM7, CLM9 et CLM11.

De même, les impulsions qui sont délivrées par l'amplificateur-dériveur AD2 sont appliquées à l'entrée conditionnée d'un circuit de commande K7. Ce circuit K7, s'il est rendu passant, transmet les impulsions qu'il reçoit ainsi et les applique sur les entrées conditionnées de douze circuits de commande Km1 à Km12, les entrées de conditionnement de ces douze circuits étant connectées chacune respectivement à chacune de douze sorties N1 à N12 d'un compteur d'impulsions CIm. Les sorties de ces douze circuits sont connectées chacune respectivement à chacune des entrées AP des douze chaînes de balayage CLm1 à CLm12, l'entrée de CLm1 étant reliée à la sortie de Km7, celle de CLm2 étant reliée à la sortie de Km8, celle de CLm3 étant reliée à la sortie de Km9, et ainsi de suite, comme on peut le voir sur les figures 4C et 4D.

Les compteurs d'impulsions CIM et CIm sont de structure connue et sont établis pour porter l'une seulement de leurs sorties à un potentiel positif. On considèrera que, avant toute opération d'extraction des bits qui ont été enregistrés dans les blocs de mémorisation, ces deux compteurs ont été remis à zéro de manière connue, cette remise à zéro pouvant être provoquée, par exemple, par l'impulsion qui est appliquée à l'entrée normale du basculeur BFM. Lorsque les compteurs CIM et CIm ont été ainsi remis à zéro, la sortie de ces compteurs qui est portée à un potentiel positif est la sortie N1. Chaque compteur est pourvu d'une entrée CP sur laquelle sont appliquées les impulsions à compter, et progresse d'un pas chaque fois qu'une impulsion est appliquée à son entrée CP. Les impulsions à compter qui sont appliquées à l'entrée CP du compteur CIM sont celles qui sont délivrées par la dernière sortie Ag des chaînes de balayage CLM1, CLM3, CLM5, CLM7, CLM9 et CLM11, ces impulsions étant transmises à cette entrée par l'intermédiaire de deux circuits mélangeurs G7 et G9. De même, les impulsions à compter qui sont appliquées à l'entrée CP du compteur CIm sont celles qui sont délivrées par la dernière sortie Ak des chaînes de balayage CLm1 à CLm12, ces impulsions étant transmises par l'intermédiaire d'un circuit mélangeur G8.

Lorsque les chaînes de balayage CLM1, CLM3, etc ... et CLm1 à CLm12 sont mises en action, les bits d'information qui sont extraits des blocs de mémorisation sont envoyés, sous forme d'impulsions, aux têtes d'enregistrement X₁ à Xₙ et Y₁ à Y_{n + 1}, par l'intermédiaire de circuits mélangeurs GX1, GX2, ..., GXn et GY1, GY2, ... , GY n + 1. Il faut signaler que, comme on peut le voir sur les figures 4A à 4D l'excitation de la tête d'enregistrement X₁ est provoquée par l'extraction des bits "1" qui ont été enregistrés dans les colonnes D1, D3, D5, D7, D9 et D11 des blocs dont la référence commence par la lettre M, l'excitation de la tête X₂ est provoquée par l'extraction des bits "1" qui ont été enregistrés dans les colonnes D13, D15, D17, D19, D21 et D23 de ces mêmes blocs, et ainsi de suite pour les autres têtes X₃, X₄, ..., Xₙ. D'une manière analogue, l'excitation de la tête Y₂ est provoquée par l'extraction des bits "1" qui ont été enregistrés dans les colonnes D7 à D18 des blocs dont la référence débute par la lettre m. De même, l'excitation de la tête Y₃ est provoquée par l'extraction des bits "1" qui ont été enregistrés dans les colonnes D19 à D30 de ces mêmes blocs, et ainsi de suite pour les autres têtes Y₄, Y₅, ..., Yₙ.

On peut observer cependant que, du fait de leur positionnement par rapport au tambour, les têtes Y₁ et Y_{n + 1} ne sont excitées chacune que pendant six tours de rotation successifs du tambour. De ce fait, l'excitation de la tête Y₁ est provoquée par l'extraction des bits "1" qui ont été enregistrés dans les colonnes D1 à D6 des blocs dont la référence débute par m.

De même, l'excitation de la tête Yn + 1 est provoquée par l'extraction des bits "1" qui ont été enregistrés dans les colonnes D(12n - 5) à D12n de ces mêmes blocs.

Ainsi qu'on l'a indiqué plus haut, la phase au cours de laquelle les têtes d'enregistrement sont excitées est déclenchée par une impulsion qui est appliquée à l'entrée normale du basculeur BFM et qui a pour effet de faire passer ce basculeur à l'état "1". De ce fait, une tension positive apparaît à la sortie normale de ce basculeur et est appliquée à l'entrée de conditionnement d'un circuit de commande K8 qui est ainsi rendu passant. La première impulsion qui, après ce basculement, est délivrée par l'amplificateur-dériveur AD3 (on rappelle que cet amplificateur-dériveur délivre une impulsion à chaque tour de rotation du tambour) et qui est appliquée sur l'entrée conditionnée du circuit K8, est transmise par ce circuit qui l'applique alors, d'une part à l'entrée complémentaire du basculeur BFM qui revient ainsi à l'état "0", d'autre part à l'entrée normale d'un basculeur BCE qui passe alors à l'état "1". La tension positive qui, dans ces conditions, apparaît à la sortie normale du basculeur BCE est appliquée sur l'une des entrées de chacun des circuits E6 et E7. Etant donné que les lames mobiles des deux contacts manuels CM1 et CM2 ont été placées, respectivement, sur les bornes DR et GT, l'autre entrée du circuit E6, qui est reliée à la borne GT, est portée à une tension positive. De même, l'autre entrée du circuit E7, qui est reliée àla borne DR, est également portée à une tension positive. Par suite, une tension positive apparaît à la sortie du circuit E6 et est appliquée à l'entrée de conditionnement du circuit K6 qui devient ainsi passant. De même, une tension positive apparaît à la sortie du circuit E7 et est appliquée à l'entrée de conditionnement du circuit K7 qui devient alors passant. La première impulsion qui, après le passage à "1" du basculeur BCE, est délivrée par l'amplificateur-dériveur AD2 et qui est appliquée à l'entrée conditionnée du circuit K7 est alors transmise par ce circuit qui l'applique à son tour aux entrées conditionnées des circuits Km1 à Km12.

De même, la première impulsion qui est délivrée par l'amplificateur-dériveur AD1 (en même temps que celle qui est délivrée par AD2) et qui est appliquée à l'entrée conditionnée du circuit K6 est transmise par ce circuit qui l'applique à son tour aux entrées conditionnées des circuits KM1, KM3, KM5, KM7, KM9 et KM11.

Etant donné que la sortie N1 de chacun des compteurs CIM et CIm est portée à une tension positive, les circuits KM1 et Km1 transmettent simultanément l'impulsion qui a été appliquée sur leurs entrées conditionnées respectives, l'impulsion transmise par KM1 étant alors appliquée à l'entrée AP de la chaîne CLM1, alors que celle qui est transmise par Km1 est appliquée à l'entrée AP de la chaîne CLm7. Dans ces conditions, la chaîne CLM1 délivre sur sa sortie A1 une impulsion qui a pour effet d'extraire les bits d'information qui ont été enregistrés dans les noyaux situés à l'intersection de la première rangée et des colonnes D1, D13, D25, ..., D(12n - 11) du bloc M1, les bits "1" ainsi extraits étant alors envoyés, sous forme d'impulsions, vers les têtes X₁ à Xₙ. Les bits "0" ne donnant lieu à aucune impulsion, on comprend que, parmi les têtes X₁ à Xₙ, seules celles qui reçoivent les impulsions correspondant à l'extraction des bits "1" sont excitées. Par ailleurs, en même temps que la chaîne CLM1, la chaîne CLm7 délivre une impulsion sur sa sortie A1, ce qui a pour effet d'extraire les bits d'information qui ont été enregistrés dans les noyaux situés à l'intersection de la première rangée et des colonnes D7, D19, D31, ..., D(12n - 5) du bloc m7, les bits ainsi extraits provoquant, de la même manière, l'excitation sélective des têtes Y₂, Y₃, ..., Y_{n + 1}.

La deuxième impulsion qui est délivrée par AD2 et qui est appliquée au circuit K7 est transmise par ce circuit. Cette impulsion, transmise par K7, est transmise ensuite par le circuit Km1 qui l'applique à l'entrée AP de la chaîne CLm7. Par suite, cette chaîne délivre une impulsion sur sa sortie A2, ce qui a pour effet d'extraire les bits d'information qui ont été enregistrés dans les noyaux situés à l'intersection de la deuxième rangée et des colonnes D7, D19, D31, ..., D(12n - 5) du bloc m7, les bits ainsi extraits provoquant l'excitation sélective des têtes Y₂, Y₃, ..., Y_{n + 1}.

On peut observer que, au moment où l'amplificateur-dériveur AD2 délivre la deuxième impulsion, aucune impulsion n'est délivrée par l'amplificateur-dériveur AD1, étant donné que les fentes du disque horloge D sont réparties de telle sorte que la cellule PH1 est excitée par les radiations lumineuses à une fréquence qui est égale à la moitié de la fréquence d'excitation de la cellule PH2. C'est pourquoi, l'amplificateur-dériveur AD1 ne délivre une deuxième impulsion qu'au moment où l'amplificateur-dériveur AD2 délivre une troisième impulsion. La deuxième impulsion délivrée par AD1 est transmise successivement par les circuits K6 et KM1, puis appliquée à l'entrée AP de la chaîne CLM1. Simultanément, la troisième impulsion qui est délivrée par AD2 est transmise successivement par les circuits K7 et Km1, puis appliquée à l'entrée AP de la chaîne CLm7. En conséquence la chaîne CLM1 délivre une impulsion sur sa sortie A3, ce qui a pour effet d'extraire les bits d'information qui ont été enregistrés dans les noyaux situés à l'intersection de la deuxième rangée et des colonnes D1, D13, D25, ..., D(12n - 11) du bloc M1, les bits extraits provoquant l'excitation sélective des têtes X₁ à Xₙ. Simultanément, la chaîne CLm7 délivre une impulsion sur sa sortie A3, ce qui a pour effet d'extraire les bits d'information qui ont été enregistrés dans les noyaux situés à l'intersection de la troisième rangée et des colonnes D7, D19, D31, ..., D(12n - 5) du bloc m7, les bits extraits provoquant l'excitation sélective des têtes Y₂, Y₃, ..., Y_{n + 1}.

L'extraction, rangée par rangée, des bits d'information contenus dans les blocs M1 et m7 se poursuit ainsi, de la façon qui vient d'être indiquée. On peut observer que, au cours de cette extraction qui s'effectue au cours d'un premier tour de rotation du tambour, les têtes d'enregistrement sont positionnées de la manière qui est illustrée sur la figure 2 et que, de ce fait, l'excitation sélective des têtes X₁ à Xₙ a pour effet de former, sur la surface du tambour, des points magnétisés de grande taille, qui sont centrés suivant les lignes D₁, D₁₃, D₂₅, ..., D_{12n - 11}.

Au cours de ce premier tour de rotation, l'excitation sélective des têtes Y₂ à Y_{n + 1} a pour effet de former, sur cette surface, des points magnétisés de petite taille, qui sont centrés suivant les lignes D₇, D₁₉, D₃₁, ..., D_{12n - 5}. L'impulsion qui, un peu avant la fin de ce premier tour, est délivrée sur la sortie Ag de la chaîne CLM1, provoque l'extraction des bits qui ont été enregistrés dans la dernière rangée du bloc M1, ce qui a pour effet d'exciter sélectivement les têtes X₁ à Xₙ. Cette même impulsion est transmise, par ailleurs, par le circuit G7 et appliquée, comme on le voit sur la figure 4A, d'une part à l'entrée d'un élément de retard R1, d'autre part, par l'intermédiaire du circuit G9, à l'entrée CP du compteur CIM. De ce fait, ce compteur CIM progresse d'un pas et porte sa sortie N2 à une tension positive. Dans ces conditions, le circuit KM1 reste passant. De même, l'impulsion qui, un peu avant la fin du premier tour, est délivrée sur la sortie Ak de la chaîne CLm7, provoque l'extraction des bits qui ont été enregistrés dans la dernière rangée du bloc m7, ce qui a pour effet d'exciter sélectivement les têtes Y₂ à Y_{n +} ₁ . Cette même impulsion est transmise, par ailleurs, par le circuit G8 et appliquée à l'entrée CP du compteur CIm.

Ce compteur progresse alors d'un pas et porte sa sortie N2 à une tension positive. Dans ces conditions, le circuit Km1 devient non passant, tandis que le circuit Km2 devient passant.

Par ailleurs, l'impulsion retardée qui, à la fin du premier tour, apparaît à la sortie de l'élément R1, est appliquée à l'entrée conditionnée d'un circuit de commande K9, ce circuit ayant son entrée de conditionnemnt connectée à la borne SR au contact CM1. Etant donné qu'aucune tension positive n'est présente à cette borne, le circuit K9 est non-passant et il bloque, par conséquent, l'impulsion retardée qu'il reçoit.

Il faut signaler que, à la fin du premier tour du tambour 11, le chariot 34 est déplacé d'un pas, ce qui a pour effet d'amener les têtes X₁, X₂, ..., Xₙ en face, respectivement, des lignes D₂, D₁₄, ..., D_{12n - 10}, et les têtes Y₂, Y₃, ..., Y_{n + 1} en face, respectivement des lignes D₈, D₂₀, ..., D_{12n - 4}. Ce déplacement du chariot est commandé de manière connue, par exemple par une impulsion dérivée de celle qui est appliquée à l'entrée CP de l'un ou l'autre des compteurs CIM et CIm. Les impulsions qui, lorsque ce déplacement est terminé, sont envoyées successivement par l'amplificateur-dériveur AD2, sont transmises par les circuits K7 et Km2 et appliquées à l'entrée AP de la chaîne CLm8. En conséquence, les bits d'informations qui ont été enregistrés dans le bloc m8 sont extraits de ce bloc au cours du deuxième tour de rotation du tambour et provoquent l'excitation sélective des têtes Y₂ à Y_{n + 1}. Les impulsions qui, au cours de ce deuxième tour, sont envoyées successivement par l'amplificateur-dériveur AD1, sont transmises par les circuits K6 et KM1 et appliquées à l'entrée AP de la chaîne CLM1. En réponse à ces impulsions, la chaîne CLM1 délivre bien des impulsions sur ses sorties A1, A3, ...,Ag, mais, étant donné que les bits "1" qui se trouvaient dans le bloc M1 ont tous été extraits au cours du premier tour de rotation du tambour, aucune impulsion n'est envoyée vers les têtes X₁ à Xₙ qui restent donc non excitées.

Ainsi, au cours du deuxième tour de rotation du tambour, l'excitation sélective des têtes Y₂ à Y_{n + 1} a pour effet, de former, sur la surface du tambour, des points magnétisés de petite taille, qui sont centrés suivant les lignes D₈, D₂₀, ..., D_{12n - 4}.

L'impulsion qui, un peu avant la fin de ce deuxième tour, est délivrée sur la sortie Ag de la chaîne CLM1, est transmise par les circuits G7 et G9 et appliquée à l'entrée CP du compteur CIM. Le compteur CIM progresse alors d'un pas. Par suite, la sortie N3 de ce compteur est portée à un potentiel positif et le circuit KM3 est rendu passant. De même, l'impulsion qui, avant la fin de ce deuxième tour, est délivrée par la sortie Ak de la chaîne CLm8, provoque l'extraction des bits qui ont été enregistrés dans la dernière rangée du bloc m8, ce qui a pour effet d'exciter sélectivement les têtes Y₂ à Y_{n + 1}. Cette même impulsion est transmise, par ailleurs, par le circuit G8 et appliquée à l'entrée CP du compteur CIm. Ce compteur progresse alors d'un pas et porte sa sortie N3 à une tension positive. De ce fait, le circuit Km3 est rendu passant.

A la fin du deuxième tour de rotation du tambour 11, le chariot 34 est déplacé d'un pas, ce qui a pour effet d'amener les têtes X₁, X₂, ..., Xₙ en face, respectivement, des lignes D₃, D₁₅, ..., D_{12n - 9}, et les têtes Y₂, Y₃, ..., Y_{n + 1} en face, respectivement des lignes D₉, D₂₁, ..., D_{12n - 3}. Après quoi, ces têtes sont sélectivement excitées par les impulsions délivrées par les blocs M3 et m9, en réponse aux impulsions qui sont envoyées par les amplificateurs-dériveurs AD1 et AD2 et qui sont appliquées respectivement, sur les entrées AP des chaînes CLM3 et CLm9.

Cette excitation a pour effet de former, au cours du troisième tour de rotation, sur la surface du tambour, des points magnétisés de grande taille qui sont centrés suivant les lignes D₃, D₁₅, ..., D_{12n - 9}, ainsi que des points magnétisés de petite taille qui sont centrés suivant les lignes D₉, D₂₁, ..., D_{12n - 3}.

Pour des raisons de simplification, on ne décrira pas les opérations qui se déroulent ensuite et qui ont pour effet de poursuivre la formation des points magnétisés sur la surface du tambour. Ces opérations sont analogues à celles qui viennent d'être exposées. En raisonnant de la même manière que ci-dessus, on verrait alors que, au cours du quatrième tour, des points magnétisés de petite taille sont formés, ces points étant centrés suivant les lignes D₁₀, D₂₂, ..., D_{12n - 2}.

De même, au cours du cinquième tour, les têtes X₁, X₂, ..., Xₙ forment des points magnétisés de grande taille centrés suivant les lignes D₅, D₁₇, ..., D_{12n - 7}, tandis que les têtes Y₂, Y₃, ..., Y_{n + 1} forment des points magnétisés de petite taille centrés suivant les lignes D₁₁, D₂₃, .., D_{12 n - 1}, et ainsi de suite pour les tours de rotation suivants. Il faut cependant signaler que l'impulsion qui, un peu avant la fin du sixième tour, est délivrée par la sortie Ak de la chaîne CLm12 et est appliquée sur l'entrée CP du compteur CIm a pour effet de faire apparaître une tension positive sur la sortie N7 de ce compteur et de rendre ainsi passant le circuit Km7. En conséquence, les impulsions qui, au cours du septième tour, sont envoyées par AD2, sont appliquées à l'entrée AP de la chaîne CLm1. On comprend ainsi que les bits d'information qui, au cours du septième tour, sont extraits du bloc m1, servent à exciter sélectivement les têtes Y₁ à Yₙ, tandis que la tête Y_{n + 1} n'est plus excitée.

Cette modification est toutefois en accord avec le positionnement des têtes, étant donné que, à partir du septième tour de rotation, la tête Y_{n +} ₁ cesse de se trouver en face du tambour, alors que la tête Y₁ qui, jusque-là, ne se trouvait pas en regard de la surface du tambour, a fini par arriver en face de cette surface. Dans ces conditions, au cours du septième tour de rotation, les têtes X₁ à Xₙ forment des points magnétisés de grande taille centrés sur les lignes D₇, D₁₉, ..., D_{12n - 5}, tandis que les têtes Y₁ à Yₙ forment des points magnétisés de petite taille centrés sur les lignes D₁ D₁₃, ..., D_{12n - 11}. De même, au cours du huitième tour, les têtes Y₁ à Yₙ forment des points magnétisés de petite taille centrés sur les lignes D₂, D₁₄, ..., D_{12n - 10}, et ainsi de suite.

Il faut signaler que l'impulsion qui, un peu avant la fin du onzième tour, est délivrée à la sortie Ag de la chaîne CLM11, est appliquée, non seulement sur l'entrée CP du compteur CIM, mais également sur l'entrée conditionnée d'un circuit de commande K10 (figure 4B), ce circuit ayant son entrée de conditionnement reliée à la sortie normale d'un basculeur BFG. Etant donné que ce basculeur est habituellement à l'état "0", le circuit de commande K10 est non-passant et il bloque, par conséquent, l'impulsion qu'il reçoit. L'impulsion qui est délivrée à la sortie Ag de la chaîne CLM11 est appliquée en outre à l'entrée normale de ce basculeur BFG qui passe alors à l'état "1" et rend ainsi passant le circuit K10. Cependant, ce basculement se produit juste après que l'impulsion qui a été délivrée par la chaîne CLM11 ait été appliquée au circuit K10, si bien que cette impulsion ne peut pas être transmise par ce circuit. Un peu avant la fin du douzième tour, la chaîne CLM11 délivre à nouveau une impulsion sur sa sortie Ag. Cette impulsion est appliquée, d'une part sur l'entrée CP du compteur CIM, d'autre part sur l'entrée conditionnée de K10. Etant donné que K10 est maintenant passant, cette impulsion est transmise par K10 qui l'applique, d'une part, sur l'entrée d'un élément de retard R2, d'autre part, par l'intermédiaire d'un circuit mélangeur G10 (figure 4C), à l'entrée complémentaire du basculeur BCE qui revient ainsi à l'état "0". L'impulsion qui a été délivrée par la sortie Ag de la chaîne CLM11 est appliquée en outre à l'entrée normale du basculeur BFG qui reste ainsi à l'état "1". Cependant, l'impulsion retardée qui apparaît ensuite à la sortie de l'élément de retard R2 est appliquée à l'entrée complémentaire de ce basculeur BFG qui revient alors à l'état "0".

Etant donné que le basculeur BCE est maintenant revenu à "0", aucune tension positive n'apparaît à la sortie normale de ce basculeur et aux sorties des circuits E6 et E7. De ce fait, les circuits de commande K6 et K7 cessent d'être passants. On peut remarquer que le retour à l'état "0" du basculeur BCE peut être également provoqué par l'impulsion délivrée à la sortie Ak de la chaîne de balayage CLm6, cette impulsion étant délivrée à cette sortie sensiblement en même temps que celle qui est délivrée, un peu avant la fin du douzième tour, à la sortie Ag de la chaîne CLM11.

L'impulsion délivrée par cette sortie Ak est en effet appliquée, d'une part à l'entrée CP du compteur CIm, d'autre part, par l'intermédiaire de G10, à l'entrée complémentaire de BCE.

On peut signaler encore que la tension positive qui apparaît à la sortie complémentaire du basculeur BCE lorsque celui-ci est revenu à "0" est appliquée à l'unité de commande 49 et constitue ainsi un signal permettant d'avertir cette unité de commande de la fin de l'enregistrement de l'image latente magnétique sur le tambour 1. A partir de ce moment-là, l'unité 49 peut commander le moteur 36 afin de ramener le chariot 34 dans sa position limite LG, puis déclencher de nouvelles opérations analogues à celles qui ont été décrites ci-dessus, afin de permettre à une autre image latente d'être enregistrée sur le tambour.

Dans le cas où le dispositif d'enregistrement fonctionne selon le premier mode qui a été indiqué plus haut, les opérations qui se déroulent sont analogues à celles qui ont été décrites ci-dessus, avec cette différence que les blocs de mémorisation m1 à m12 ne sont pas mis en jeu. En effet, ce premier mode est obtenu en plaçant la lame mobile du contact CM1 sur la borne SR et la lame mobile du contact CM2 sur la borne GT. Dans ce cas, aucune tension positive n'apparaît aux sorties des circuits E1 et E3 et, par conséquent les circuits K2, K3 et K1 sont non-passants. Au contraire, la tension positive qui apparaît à la sortie du circuit E2 est appliquée, d'une part au circuit K4 qui est ainsi rendu passant, d'autre part, par l'intermédiaire de U1, à la porte PRT1 qui est ainsi rendue passante, alors que les portes PRT2 et PRT3 restent non-passantes. De ce fait, lorsque le générateur de bits 47 est excité par les impulsions envoyées par l'organe de commande d'excitation 48, les groupes de w/2 bits qui sont véhiculés par les conducteurs B1, B3, B5, B7, etc, ..., sont, puisque la porte PRT1 est passante, envoyés vers les blocs M1, M3, M5, M7, M9 et M11 dans lesquels ils viennent s'enregistrer. Lorsque l'enregistrement, dans ces blocs, de tous les bits nécessaires à la formation de l'image latente sur le tambour est terminé, l'unité de commande 49 délivre une impulsion qui, appliquée sur l'entrée normale du basculeur BFM, fait passer ce basculeur à l'état "1" et rend passant le circuit K8. L'impulsion qui est ensuite envoyée par AD3 et qui est transmise par K8 est appliquée sur l'entrée complémentaire du basculeur BFM qui revient ainsi à "0" et sur l'entrée normale du basculeur BCE qui passe alors à "1".

Par suite, une tension positive apparaît à la sortie de E6, ce qui rend passant le circuit K6. Au contraire aucune tension positive n'apparaît à la sortie de E7 puisque la lame mobile du contact CM1 a été placée sur la borne SR. En conséquence, le circuit K7 est non passant et bloque donc les impulsions délivrées par AD2, tandis que les impulsions qui, au cours du premier tour de rotation du tambour, sont délivrées par AD1 sont transmises par les circuits K6 et KM1 et appliquées à l'entrée AP de la chaîne CLM1, ce qui provoque l'extraction, rangée par rangée, des bits contenus dans le bloc M1 et l'excitation sélective des têtes X₁ à Xₙ. Etant donné que les têtes X₁ à Xₙ se trouvent alors dans la position illustrée sur la figure 2, cette excitation a pour effet de former, sur la surface du tambour, des points magnétisés de grande taille, centrés suivant les lignes D₁, D₁₃, D₂₅, ..., D_{12n - 11}. Un peu avant la fin du premier tour, une impulsion est délivrée sur la sortie Ag de la chaîne CLM1. Cette impulsion, qui provoque l'extraction des bits enregistrés dans la dernière rangée de M1, est appliquée, par ailleurs, d'une part à l'entrée de l'élément de retard R1, d'autre part à l'entrée CP du compteur CIM qui progresse alors d'un pas. Cependant, étant donné que la lame mobile de CM1 a été positionnée sur la borne SR et que circuit K9 est ainsi passant, l'impulsion retardée qui apparaît peu après à la sortie de R1 est appliquée également à l'entrée CP du compteur CIM qui progresse alors à nouveau d'un pas. Par suite de ces deux progressions successives du compteur CIM, la sortie de ce compteur qui est portée à un potentiel positif est la sortie N3, de sorte que le circuit KM3 est rendu passant. Par ailleurs, à la fin du premier tour, le chariot 34 est déplacé de deux pas, ce déplacement pouvant être déclenché, par exemple, par deux impulsions dérivées de celles qui ont été appliquées successivement à l'entrée CP de CIM. De ce fait, les têtes X₁, X₂, ..., Xₙ sont amenées en face, respectivement, des lignes D₃, D₁₅, ..., D_{12n - 9}.

Au cours du deuxième tour de rotation du tambour, ces têtes sont sélectivement excitées par les impulsions délivrées par le bloc M3, en réponse aux impulsions qui, envoyées par AD1, sont transmises par K6 et KM3 et appliquées à l'entrée AP de la chaîne CLM3. Cette excitation a pour effet de former, sur la surface du tambour, des points magnétisés de grande taille qui sont centrés suivant les lignes D₃, D₁₅, ..., D_{12n - 9}.

Les opérations qui se déroulent ensuite sont analogues à celles qui viennent d'être décrites. En raisonnant de la manière indiquée ci-dessus, on verrait que, au cours du troisième tour de rotation du tambour, les têtes X₁, X₂, ..., Xₙ forment des points magnétisés de grande taille centrés suivant les lignes D₅, D₁₇, ..., D_{12n - 7}. On verrait, de même que, au cours du quatrième tour de rotation, les points magnétisés formés sont centrés suivant les lignes D₇, D₁₉, ..., D_{12n - 5}, que, au cours du cinquième tour, ces points sont centrés suivant les lignes D₉, D₂₁, ..., D_{12n - 3}, et que, au sixième tour, ces points sont centrés suivant les lignes D₁₁, D₂₃, ..., D_{12n - 1}.

Il faut maintenant signaler que l'impulsion qui, un peu avant la fin du sixième tour, est délivrée à la sortie Ag de la chaîne CLM11, est appliquée, non seulement sur l'entrée CP du compteur CIM, mais également sur l'entrée de l'élément de retard R1, sur les entrées conditionnées des circuits K10 et K11 et sur l'entrée normale du basculeur BFG qui passe alors à "1". Cette impulsion, bloquée par K10, est transmise par K11 qui l'applique, par l'intermédiaire de G10, sur l'entrée complémentaire du basculeur BCE qui revient ainsi à "0". La tension positive qui apparaît alors à la sortie complémentaire de BCE est appliquée à l'unité de commande 49 et avertit ainsi cette unité de la fin de l'enregistrement de l'image latente magnétique sur le tambour. Par ailleurs, l'impulsion retardée qui apparaît ensuite à la sortie de R1 est transmise par K9 qui l'applique à l'entrée CP du compteur CIM, ce qui a pour effet de remettre ce compteur à zéro.

Dans le cas où le dispositif d'enregistrement fonctionne selon le deuxième mode qui a été indiqué plus haut, les opérations qui se déroulent sont analogues à celles qui sont effectuées lorsque ce dispositif fonctionne selon le premier mode, à cette différence que, au lieu des blocs M1, M3, M5, M7, M9 et M11, ce sont maintenant les blocs de mémorisation m1 à m12 qui sont mis en jeu. En effet, ce deuxième mode est obtenu en plaçant la lame mobile du contact CM1 sur la borne DR et la lame mobile du contact CM2 sur la borne PT. Dans ce cas, aucune tension positive n'apparaît à la sortie des circuits E1 et E2 et, par conséquent, les circuits K2, K3 et K4 sont non-passants. Au contraire, la tension positive qui apparaît à la sortie du circuit E3 est appliquée, d'une part au circuit K1 qui est ainsi rendu passant, d'autre part, par l'intermédiaire de U2, à la porte PRT2 qui est ainsi rendue passante, tandis que les portes PRT1 et PRT3 sont non-passantes. De ce fait, lorsque le générateur de bits 47 est excité par les impulsions envoyées par l'organe de commande d'excitation 48, les groupes de w bits qui sont véhiculés par les conducteurs B1 à Bw sont, puisque la porte PRT2 est passante, envoyés vers les blocs m1 à m12 dans lesquels ils viennent s'enregistrer. Lorsque l'enregistrement, dans ces blocs, de tous les bits nécessaires à la formation de l'image latente sur le tambour est terminé, l'unité de commande 49 délivre une impulsion qui, appliquée sur l'entrée normale du basculeur BFM, fait passer ce basculeur à l'état "1" et rend passant le circuit K8. L'impulsion qui est ensuite envoyée par AD3 et qui est transmise par K8 est appliquée sur l'entrée complémentaire du basculeur BFM qui revient ainsi à "0" et sur l'entrée normale du basculeur BCE qui passe alors à "1". Par suite, une tension positive apparaît à la sortie de E7, ce qui rend passant le circuit K7. Au contraire, aucune tension positive n'apparaît àla sortie de E6 puisque la lame mobile de CM2 est placée sur la borne PT.

Par suite, le circuit K6 reste non passant et il bloque, par conséquent, les impulsions délivrées par AD1, alors que les impulsions qui, au cours du premier tour de rotation du tambour, sont délivrées par AD2, sont transmises successivement par les circuits K7 et Km1, ce qui provoque l'extraction, rangée par rangée, des bits contenus dans le bloc m7 et l'excitation sélective des têtes Y₂, Y₃, ..., Y_{n + 1}. Etant donné que ces têtes se trouvent alors dans la position illustrée par la figure 2, cette excitation a pour effet de former, sur la surface du tambour, des points magnétisés de petite taille, centrés suivant les lignes D₇, D₁₉, ..., D₁₂ₙ ₋ ₅. Un peu avant la fin du premier tour, une impulsion est délivrée sur la sortie Ak de la chaîne CLm7. Cette impulsion, qui provoque l'extraction des bits enregistrés dans la dernière rangée du bloc m7, est appliquée en outre à l'entrée CP du compteur CIm qui progresse alors d'un pas. Par ailleurs, à la fin du premier tour, le chariot 34 est déplacé d'un pas, ce déplacement pouvant être déclenché, par exemple, par une impulsion dérivée de celle qui est appliquée à l'entrée CP du compteur CIm. De ce fait, les têtes Y₂, Y₃, ..., Y_{n + 1} sont amenées en face, respectivement, des lignes D₈, D₂₀, ..., D_{12n - 4}. Au cours du deuxième tour de rotation du tambour, ces têtes sont sélectivement excitées par les impulsions qui sont délivrées par le bloc m8, en réponse aux impulsions qui, envoyées par AD2 et transmises par K7 et Km2, sont appliquées à l'entrée AP de la chaîne CLm8. Cette excitation a pour effet de former, sur la surface du tambour, des points magnétisés de petite taille, centrés suivant les lignes D₈, D₂₀, ..., D_{12n - 4}.

En raisonnant de la même façon, on verrait que les points magnétisés de petite taille qui sont formés au cours du troisième tour sont centrés suivant les lignes D₉, D₂₁, ..., D_{12n - 3}, que ceux formés au cours du quatrième tour sont centrés suivant les lignes D₁₀, D₂₂, ..., D_{12n - 2}, et ainsi de suite. On verrait, finalement que les points magnétisés de petite taille qui sont formés au cours du douzième tour de rotation du tambour, sont centrés suivant les lignes D₆, D₁₈, ..., D_{12n - 6}. L'impulsion qui, un peu avant la fin de de douzième tour, est délivrée à la sortie Ak de la chaîne CLm6, est appliquée, non seulement sur l'entrée CP du compteur CIm, ce qui provoque la remise à zéro de ce compteur, mais également, par l'intermédiaire de G10, sur l'entrée complémentaire du basculeur BCE qui revient ainsi à "0". La tension positive qui apparaît alors à la sortie complémentaire de BCE est appliquée à l'unité de commande 49 et avertit ainsi cette unité de la fin de l'enregistrement de l'image latente magnétique sur le tambour.

Il y a lieu de signaler maintenant que, pour éviter de maculer inutilement le rouleau de transfert 20, le dispositif applicateur de révélateur 16 de la machine représentée sur la figure 1 fonctionne, non pas de manière continue, mais par intermittence. Plus précisément, dans l'exemple décrit, ce dispositif 16 n'est commandé, pour déposer des particules de révélateur sur la surface cylindrique du tambour, qu'à partir de l'instant où les premiers points magnétisés formés sur cette surface au cours du dernier tour de rotation (c'est-à-dire, selon le cas, au cours du sixième tour ou au cours du douzième tour) vont passer devant ce dispositif 16. Ce dispositif 16 cesse d'être commandé dès que les derniers points magnétisés formés au cours de ce dernier tour sont passés devant ce dispositif applicateur. L'image de poudre qui est formée, dans ces conditions, sur la surface du tambour est transférée, lorsqu'elle arrive dans le poste de transfert H, sur une feuille de papier 19 qui, délivrée par le magasin 10, a été engagée entre le tambour 11 et le rouleau de transfert 20 juste avant que le bord avant de cette image de poudre n'atteigne ce poste de transfert.

La figure 8 montre l'aspect présenté par une image de poudre qui a été formée sur la surface du tambour dans le cas où le dispositif de formation d'images latentes magnétiques fonctionne suivant le premier mode qui a été exposé en détail plus haut. Cette image, qui représente une portion du caractère "B", est formée par le dépôt de particules de révélateur sur des points magnétisés de grande taille, qui, comme le montre la figure 8, sont disposés aux intersections de lignes verticales D₁, D₃, D₅, ..., etc, et de rangées horizontales L₁, L₃, L₅, etc ..., ces lignes et ces rangées étant espacées les unes des autres d'une distance égale à cent six microns.

On peut remarquer que, si les traits horizontaux 60 et verticaux 61 qui font partie de cette image de poudre apparaissent à peu près réguliers, il n'en est pas de même des traits obliques 62 de cette image, ces traits obliques présentant en effet une largeur irrégulière due à l'espacement trop grand entre deux points magnétisés voisins.

De même, la figure 9 montre l'aspect présenté par une image de poudre qui a été formée sur la surface du tambour dans le cas où le dispositif de formation d'images latentes magnétiques fonctionne suivant le deuxième mode qui a été exposé en détail plus haut. Cette image, qui représente une portion du caractère "B", est formée par le dépôt de particules de révélateur sur des points magnétisés de petite taille qui comme le montre la figure 9, sont disposés aux intersections de lignes verticales D₁, D₂, D₃, D₄, etc ..., et de rangées horizontales L₁, L₂, L₃, L₄, etc ..., ces lignes et ces rangées étant espacées les unes des autres d'une distance égale à cinquante-trois µm. On peut remarquer que les traits horizontaux 60 et verticaux 61 de cette image de poudre apparaissent à peu près réguliers, tandis que les traits obliques consistent en une succession de petits tas de poudre 64 et sont donc relativement peu marqués. Pour pallier à ce défaut, il est possible d'utiliser, pour constituer chacun de ces traits obliques, non pas une seule, mais plusieurs lignes contigües de points magnétisés ainsi qu'on peut le voir sur la figure 10 où chaque trait oblique est obtenu en associant deux lignes contigües de points magnétisés. La figure 10 montre cependant que chacune des lignes obliques de l'image de poudre n'est pas rectiligne, mais se présente sous la forme d'une ligne ondulée 65 ce qui contribue à donner au caractère un aspect déformé. C'est pourquoi le premier mode et le deuxième mode de fonctionnement du dispositif de formation d'images latentes ne seront, en principe, pas utilisés lorsque ces images comportent des traits courbes ou obliques.

La figure 11 montre l'aspect présenté par une image de poudre qui a été formée sur la surface du tambour dans le cas où le dispositif de formation d'images latentes magnétiques fonctionne suivant le troisième mode qui a été exposé en détail plus haut. Cette image est formée par le dépôt de particules de révélateur sur des points magnétisés de grande et de petite taille, les points magnétisés de grande taille étant disposés aux intersections de lignes verticales D₁, D₃, D₅, etc ..., et de rangées horizontales L₁, L₃, L₅, etc ..., les points magnétisés de petite taille étant disposés aux intersections de lignes verticales D₂, D₄, D₆, etc ..., et de rangées horizontales L₂, L₄, L₆, etc ..., toutes ces lignes et ces rangées étant espacées les unes des autres d'une distance égale à cinquante-trois microns. On peut observer alors que, dans cette image, les traits horizontaux et verticaux sont encore plus réguliers que ceux de l'image représentée sur la figure 8, étant donné que, dans l'espace compris entre deux points magnétisés de grande taille situés sur une même ligne ou sur une même rangée se trouve maintenant un point magnétisé de petite taille. En outre, dans l'image de poudre qui est représentée sur la figure 11, les traits obliques ne souffrent pas du défaut d'irrégularité d'épaisseur présenté par les images des figures 8 à 10. On peut même observer sur la figure 11 que, par une habile disposition des points magnétisés de petite taille, on arrive à obtenir des traits obliques ayant sensiblement la même épaisseur que les autres traits, sans pour cela que ces traits obliques présentent une ondulation marquée. On comprend alors que la configuration des images, en particulier des caractères, qui comportent des traits courbes ou obliques s'en trouve fortement améliorée.

Naturellement, l'invention n'est pas limitée aux modes de mise en oeuvre décrits et illustrés qui n'ont été donnés qu'à titre d'exemple. Au contraire, elle comprend tous les moyens constituant des équivalents techniques de ceux décrits et illustrés, considérés isolément ou en combinaison et mis en oeuvre dans le cadre des revendications qui suivent. C'est ainsi, par exemple, que les blocs de mémorisation qui, dans l'exemple décrit, sont formés d'éléments de mémoire à tores magnétiques pourront être remplacés par des éléments de mémoire à circuits intégrés de type connu. De même, les sélecteurs de rangées SRM et SRm pourront être réalisés au moyen de circuits intégrés bien connus, tels que, par exemple des circuits conçus selon la technologie T.T.L et vendus sous la référence SN 74 LS 541 par la Société américaine dite "Texas Instrument Corp.", ces circuits étant pilotés par des circuits vendus, par cette même Société, sous la référence SN 74 LS 154.

## Revendications

1. Dispositif de formation d'images latentes magnétiques comprenant un élément d'enregistrement (11) et plusieurs têtes d'enregistrement magnétique, cet élément d'enregistrement étant entraîné en déplacement suivant une direction prédéterminée (F) et étant pourvu de pistes d'enregistrement magnétique (D₁, D₂, D₃, ...), orientées pratiquement parallèlement à cette direction, lesdites pistes étant écartées les unes des autres d'un pas constant (p), ce dispositif étant caractérisé en ce qu' il comprend :
- au moins deux têtes d'enregistrement magnétique (X₁, Y₁) présentant chacune un pôle d'enregistrement (E) dont la largeur diffère d'une tête à l'autre, la largeur (e₁) du pôle le plus large étant supérieure au pas d' espacement (p) des pistes, la largeur (e₂) du pôle le plus étroit étant telle que la somme (e₁ + e₂) des largeurs du pôle le plus large et du pôle le plus étroit est inférieure au double dudit pas d'espacement,
- un organe d'entraînement (33, 34, 35, 36) établi pour amener ces têtes successivement en face de chacune desdites pistes et permettre à ces têtes, lorsqu'elles sont excitées sélectivement, de former des points magnétisés (PM1, PM2) de tailles différentes centrés sur ces pistes,
- et une unité de commande d'activation des têtes (40) établie pour exciter sélectivement ces têtes de telle manière que les points magnétisés formés sur l'élément d'enregistrement ne se chevauchent pas.

2. Dispositif de formation d'images latentes magnétiques selon revendication 1, caractérisé en ce que, le nombre de pistes de l'élément d'enregistrement (11) étant égal à 2fn (f et n étant des nombres entiers) et l'organe d'entraînement comportant un support mobile (34) pouvant être déplacé suivant une direction (T) perpendiculaire à la direction de déplacement (F) de cet élément d'enregistrement, les têtes d'enregistrement magnétique se répartissent en une première série de têtes comprenant n têtes de même taille (X₁, X₂, ..., Xₙ) et en une seconde série de têtes comprenant (n + 1) têtes de même taille (Y₁, Y₂, ..., Yₙ, Y_{n + 1}), la taille des têtes de cette seconde série étant différente de celle des têtes de la première série, toutes ces têtes étant solidaires dudit support mobile (34) et étant réparties régulièrement le long de celui-ci selon un pas d'espacement égal à fp, les têtes de la seconde série étant disposées en alternance avec celles de la première série, chaque tête de la première série se trouvant placée entre deux têtes de la seconde série.

3. Dispositif de formation d'images latentes magnétiques selon revendication 2, caractérisée en ce que, les têtes de la première série ayant une taille supérieure à celle des têtes de la seconde série, l'unité de commande d'activation (40) comprend :
- un générateur de bits d'information (47) pourvu de w conducteurs de sortie (B1, B2, ..., Bw), w étant un nombre entier < n, ce générateur étant établi pour, lorsqu'il est excité, délivrer sur ses conducteurs de sortie des groupes de bits d'information destinés à commander la formation, sur l'élément d'enregistrement (11), d'une image constituée de points magnétisés répartis, soit à l'intérieur d'un premier type de matrice comprenant w lignes horizontales et z lignes verticales écartées les unes des autres d'une distance éale à p (w et z étant des nombres entiers avec z ≦ n), soit à l'intérieur d'un deuxième type de matrice comprenant w/2 lignes horizontales et z/2 lignes verticales écartées les unes des autres d'une distance égale à 2p,
- une première série de blocs de mémorisation comprenant f blocs (M1, M3, ..., M11) comportant chacun kn/2 positions d'emmagasinage disposées suivant n colonnes (telles que D1, D13, D25, ..., D(12n - 11) et k/2 rangées (k étant un nombre entier au moins égal à w), ces k/2 rangées étant reliées audit générateur de bits (47) pour recevoir des groupes de w/2 bits délivrés par ce générateur, chacune de ces n colonnes étant connectée respectivement à chacune des têtes de la première série (X₁, X₂, ..., Xₙ) pour permettre à ces têtes de recevoir, sous forme d'impulsions électriques, les bits d'information qui sont extraits de chacun de ces f blocs, rangée par rangée,
- une deuxième série de blocs de mémorisation comprenant 2 f blocs (m1, m2, ..., m12) comportant chacun kn positions d'emmagasinage disposées suivant n colonnes (telles que D1, D13, D25, ..., D(12n - 11) et k rangées, ces k rangées étant reliées audit générateur de bits (47) pour recevoir des groupes de w bits délivrés par ce générateur, chacune de ces n colonnes étant connectée respectivement à chacune des têtes de la seconde série (Y₁, Y₂, ..., Y_{n + 1}), à l'exception des f derniers blocs pour la première (Y₁) de ces têtes et des f premiers blocs pour la dernière (Y_{n + 1}) de ces têtes, afin de permettre à toutes ces têtes de recevoir, sous forme d'impulsions électriques, les bits d'information qui sont extraits de chacun de ces 2 f blocs, rangée par rangée.

4. Dispositif de formation d'images latentes magnétiques selon revendication 3, caractérisé en ce que, les conducteurs de sortie du générateur du bits (47) se répartissant en conducteurs pairs (B2, B4, B6, ...) et en conducteurs impairs (B1, B3, B5, ...), l'unité de commande d'activation (40) comprend en outre :
- un premier contact (CM1) pouvant être placé sur l'une ou l'autre de deux positions et établi pour, lorsqu' il est placé sur une première position, délivrer un signal électrique sur une première borne de sortie (SR), et pour, lorsqu'il est placé sur une deuxième position, délivrer un signal électrique sur une deuxième borne de sortie (DR),
- un deuxième contact (CM2) pouvant être placé sur l'une ou l'autre de deux positions et établi pour, lorsqu' il est placé sur une première position, délivrer un signal électrique sur une première borne de sortie (PT), et pour, lorsqu'il est placé sur une deuxième position, délivrer un signal électrique sur une deuxième borne de sortie (GT),
- une première porte (PRT1) disposée entre le générateur de bits (47) et les blocs de mémorisation de la première série (M1, M3, ..., M11) pour contrôler la transmission des groupes de w/2 bits d'information qui sont envoyés par ce générateur vers ces blocs, par l'intermédiaire desdits conducteurs impairs (B1, B3, B5, ...), cette porte étant rendue passante lorsque le premier contact (CM1) délivre un signal électrique sur sa première borne de sortie (SR) et que, simultanément, le deuxième contact (CM2) délivre un signal électrique sur sa deuxième borne de sortie (GT),
- et une deuxième porte (PRT2) disposée entre le générateur de bits (47) et les blocs de mémorisation de la deuxième série (m1, m2, ..., m12) pour contrôler la transmission des groupes de w bits d'information qui sont envoyés par ce générateur vers ces blocs, par l'intermédiaire des w conducteurs de sortie (B1, B2, B3, B4, ...) de ce générateur, cette deuxième porte étant rendue passante lorsque le premier contact (CM1) délivre un signal électrique sur sa deuxième borne de sortie (DR) et que, simultanément, le deuxième contact (CM2) délivre un signal électrique sur sa première borne de sortie (PT).

5. Dispositif de formation d'images latentes magnétiques selon revendication 4, caractérisé en ce que l'unité de commande d'activation (40) comprend encore :
- une troisième porte (PRT3) disposée entre le générateur de bits (47) et les blocs de mémorisation de la deuxième série (m1, m2, ..., m12) pour contrôler la transmission de groupes de w/2 bits d'information qui sont envoyés par ce générateur vers ces blocs, par l'intermédiaire des conducteurs pairs (B2, B4, B6, ...),
- un ensemble de commutation (K2, K3, G3, BCP, E4, E5, U1, U2) placé sous le contrôle des deux contacts (CM1 et CM2) et établi pour, lorsque ces deux contacts délivrent simultanément un signal électrique sur leurs deuxièmes bornes de sortie respectives (DR et GT), rendre alternativement passants la deuxième porte (PRT2) et l'ensemble formé par la première porte (PRT1) et la troisième porte (PRT3), afin de permettre aux groupes de w bits délivrés successivement par le générateur (47) d'être envoyés alternativement, uniquement vers les blocs de la deuxième série, puis, à la fois, vers les blocs des deux séries.

6. Dispositif de formation d'images latentes magnétiques selon l'une quelconque des revendications 4 et 5, caractérisé en ce que l'unité de commande d'activation (40) comprend en outre :
- un premier générateur d'impulsions (PH1, AD1) établi pour délivrer une impulsion électrique chaque fois que élément d'enregistrement (11) s'est déplacé d'une longueur égale au double du pas (p) d'espacement des pistes, les impulsions délivrées par ce générateur étant destinées à être envoyées vers les blocs de mémorisation de la première série (M1, M3, ..., M11) afin de provoquer l'extraction, rangée par rangée, des bits d'information qui ont été enregistrés dans ces blocs,
- un deuxième générateur d'impulsions (PH2, AD2) établi pour délivrer une impulsion électrique chaque fois que l'élément d'enregistrement (11) s'est déplacé d'une longueur égale au pas (p) d'espacement des pistes, les impulsions délivrées par ce générateur étant destinées à être envoyées vers les blocs de mémorisation de la deuxième série (m1, m2, ...,m12) afin de provoquer l'extraction, rangée par rangée, des bits d'information qui ont été enregistrés dans ces blocs,
- et un groupe de contrôle (BCE, E6, K6, E7, K7) établi pour être rendu actif lorsque l'enregistrement, dans les blocs de mémorisation, des bits d'information délivrés par le générateur de bits (47) est terminé, ce groupe de contrôle étant lui-même placé sous le contrôle des deux contacts (CM1 et CM2) et étant établi en outre, dès qu'il est rendu actif, pour autoriser l'envoi vers les blocs de la première série, des impulsions délivrées par le premier générateur d'impulsions (PH1, AD1), dans le cas où le deuxième contact (CM2) délivre un signal électrique sur sa deuxième borne de sortie (GT), et autoriser l'envoi, vers les blocs de la deuxième série, des impulsions délivrées par le deuxième générateur d'impulsions (PH2, AD2), dans le cas où le premier contact (CM1) délivre un signal électrique sur sa deuxième borne de sortie (DR).

7. Dispositif de formation d'images latentes magnétiques selon revendication 6, caractérisé en ce que l'unité de commande d'activation (40) comprend encore :
- un premier groupe de chaînes de balayage comprenant f chaînes (CLM1, CLM3, ..., CLM11) associées chacune respectivement à chacun des f blocs de mémorisation de la première série (M1, M3, ..., M11) chaque chaîne comportant d'une part une entrée (AP) destinée à recevoir les impulsions envoyées par le premier générateur d'impulsions (PH1, AD1) et transmises sous le contrôle du groupe de contrôle (BCE, EG, K6, E7, K7), d'autre part k/2 sorties (A1, A3, ..., Ag) connectées chacune respectivement à chacune des rangées du bloc associé à cette chaîne,
- un deuxième groupe de chaînes de balayage comprenant 2 f chaînes (CLm1, CLm2, ..., CLm12) associées chacune respectivement à chacun des 2 f blocs de mémorisation de la deuxième série (m1, m2, ..., m12), chaque chaîne comportant d'une part une entrée (AP) destinée à recevoir les impulsions envoyées par le deuxième générateur d'impulsions (PH2, AD2) et transmises sous le contrôle du groupe de contrôle (BCE, E6, K6, E7, K7), d'autre part k sorties (A1, A3, ..., Ak) connectées chacune respectivement à chacune des rangées du bloc associé à cette chaîne,
chacune des chaînes du premier et du deuxième groupe étant établie pour, en réponse à une impulsion appliquée à son entrée (AP) délivrer une impulsion sur l'une seulement de ses sorties et progresser ensuite d'un pas afin de permettre, lorsqu'une autre impulsion est appliquée à cette entrée, la délivrance d'une impulsion sur la sortie suivante de cette chaîne.

8. Dispositif de formation d'images latentes magnétiques selon revendication 7, caractérisé en ce que l'unité de commande d'activation (40) comprend en outre :
- un premier groupe de f circuits de commande (KM1, KM3, ..., KM11) associés chacun respectivement à chacune des chaînes du premier groupe (CLM1, CLM3, ..., CLM11) et connectés au premier générateur d'impulsions (PH1, AD1) pour recevoir les impulsions envoyées par ce premier générateur sous le contrôle du groupe de contrôle, chacun de ces circuits de commande pouvant être rendu sélectivement passant afin de transmettre chacune des impulsions qu'il reçoit et de les appliquer à l'entrée (AP) de la chaîne à laquelle il est associé,
- un premier compteur (CIM) comportant une entrée (CP) et f paires de sorties (N1, N2, ..., N12), chacune de ces paires de sorties (telle que N1, N2) étant connectée respectivement à chacun des f circuits de commande du premier groupe afin de permettre à chacun de ces circuits d'être rendu passant uniquement lorsqu'un signal électrique apparaît sur l'une ou l'autre des deux sorties (N1 et N2 par exemple) qui sont connectées à ce circuit, l'entrée (CP) de ce compteur étant connectée à la dernière sortie (Ag) des chaînes de balayage du premier groupe pour recevoir les impulsions délivrées sur ces sorties (Ag), ce compteur étant établi pour, d'une part, délivrer un signal électrique sur l'une seulement de ses 2 f sorties (N1, N2, ..., N12), et pour, d'autre part progresser d'un pas chaque fois qu'une impulsion est appliquée à son entrée (CP),
- un deuxième groupe de 2 f circuits de commande (Km1, Km2, ..., Km12) associés chacun respectivement à chacune des chaînes du deuxième groupe (CLm1, CLm2, ..., CLm12) et connectés au deuxième générateur d'impulsions (PH2, AD2) pour recevoir les impulsions envoyées par ce deuxième générateur sous le contrôle du groupe de contrôle, chacun de ces circuits de commande pouvant être rendu sélectivement passant afin de transmettre chacune des impulsions qu'il reçoit et de les appliquer à l'entrée (AP) de la chaîne à laquelle il est associé,
- un deuxième compteur (CIm) comportant une entrée (CP) et 2 f sorties (N1, N2, ..., N12), chacune de ces 2 f sorties étant connectée respectivement à chacun des 2 f circuits de commande du deuxième groupe afin de permettre à chacun de ces circuits d'être rendu passant uniquement lorsqu'un signal électrique apparaît à la sortie qui est connectée à ce circuit, l'entrée (CP) de ce deuxième compteur étant connectée à la dernière sortie (Ak) des chaînes de balayage du deuxième groupe pour recevoir les impulsions délivrées sur ces sorties (Ak), ce deuxième compteur étant établi pour, d'une part, délivrer un signal électrique sur l'une seulement de ses 2 f sorties (N1, N2, ..., N12), et pour, d'autre part progresser d'un pas chaque fois qu'une impulsion est appliquée à son entrée (CP).

9. Dispositif de formation d'images latentes magnétiques selon revendication 8, caractérisé en ce que l'unité de commande d'activation (40) comprend encore un élément de retard (R1) connecté pour recevoir les impulsions délivrées sur la dernière sortie (Ag) de chacune des chaînes de balayage du premier groupe (CLM1, CLM3, ..., CLM11), et un circuit de commande (K9) disposé pour recevoir les impulsions retardées délivrées par cet élément de retard et les appliquer, s'il est rendu passant, à l'entrée (CP) du premier compteur (CIM), ce circuit de commande (K9) étant connecté par ailleurs à la première borne de sortie (SR) du premier contact (CM1) de sorte que, lorsque ce contact est positionné de façon à délivrer un signal électrique sur sa première borne de sortie, ce circuit de commande (K9) est rendu passant et applique les impulsions retardées qu'il reçoit à l'entrée (CP) du premier compteur (CIM), ce qui a alors pour effet de faire progresser ce compteur de deux pas, au lieu d'un pas, à la fin de l'extraction des bits de chacun des blocs de mémorisation de la première série (M1, M3, ...,M11).

10. Dispositif de formation d'images latentes magnétiques selon l'une quelconque des revendications 2 à 9, caractérisé en ce que la valeur de f est prise égale à six.

## Patentansprüche

1. Vorrichtung zur Erzeugung von latenten magnetischen Bildern, die ein Aufzeichnungselement (11) und mehrere magnetische Aufzeichnungsköpfe enthält, wobei dieses Aufzeichnungselement entlang einer vorbestimmten Richtung (F) angetrieben und mit magnetischen Aufzeichnungsspuren (D₁, D₂, D₃ ...) ausgestattet ist, die praktisch parallel zu dieser Richtung ausgerichtet sind, wobei diese Spuren eine von der anderen durch eine konstante Schrittweite (p) getrennt sind, wobei diese Vorrichtung dadurch gekennzeichnet ist, daß sie enthält:
- mindestens zwei magnetische Aufzeichnungsköpfe (X₁, Y₁), die jeweils einen Aufzeichnungspol (E) aufweisen, dessen Breite von einem Kopf zum anderen unterschiedlich ist, wobei die Breite (e₁) des breitesten Pols größer als die Schrittweite (p) der Spuren ist, wobei die Breite (e₂) des schmalsten Pols so ist, daß die Summe (e₁ + e₂) der Breiten des breitesten Pols und des schmalsten Pols kleiner als das Doppelte dieser Schrittweite ist,
- eine Antriebseinrichtung (33, 34, 35, 36), die vorgesehen ist, um diese Köpfe nacheinander vor jede dieser Spuren zu bringen und diesen Köpfen zu ermöglichen, auf diese Spuren zentrierte, magnetisierte Punkte (PM1, PM2) von verschiedener Größe zu bilden, wenn sie selektiv angeregt werden,
- und eine Steuereinheit (40) zur Aktivierung der Köpfe, die vorgesehen ist, um selektiv diese Köpfe so anzuregen, daß die magnetisierten Punkte, die auf dem Aufzeichnungselement ausgebildet sind, sich nicht überlappen.

2. Vorrichtung zur Erzeugung von latenten magnetischen Bildern nach Anspruch 1, dadurch gekennzeichnet, daß die Zahl von Spuren des Aufzeichnungselements (11) gleich 2fn ist (f und n sind ganze Zahlen) und die Antriebseinrichtung einen mobilen Träger (34) enthält, der in einer Richtung (T) verschoben werden kann, die zur Richtung der Verschiebung (F) dieses Aufzeichnungselements senkrecht ist, wobei die magnetischen Aufzeichnungsköpfe sich in eine erste Gruppe von Köpfen, die n Köpfe gleicher Größe (X₁, X₂, ..., Xₙ) enthält, und in eine zweite Gruppe von Köpfen aufteilen, die n + 1 Köpfe gleicher Größe (Y₁, Y₂, ..., Yₙ, Yₙ₊₁) enthält, wobei die Größe der Köpfe der zweiten Gruppe verschieden von der der Köpfe der ersten Gruppe ist, wobei all diese Köpfe fest mit diesem mobilen Träger (34) verbunden sind und regelmäßig entlang dessen Länge gemäß einem Schrittabstand gleich fp verteilt sind, wobei die Köpfe der zweiten Gruppe alternierend mit jenen der ersten Gruppe angeordnet sind, wobei jeder Kopf der ersten Gruppe sich zwischen zwei Köpfen der zweiten Gruppe angeordnet befindet.

3. Vorrichtung zur Erzeugung von latenten magnetischen Bildern gemäß Anspruch 2, dadurch gekennzeichnet, daß die Köpfe der ersten Gruppe eine Größe haben, die größer als jene der Köpfe der zweiten Gruppe ist, wobei die Steuereinheit (40) zur Aktivierung enthält:
- einen Datenbitgenerator (47), der mit w Ausgangsleitern (B1, B2, ... Bw), ausgestattet ist, wobei w eine ganze Zahl < n ist, wobei dieser Generator eingerichtet ist, um, falls er angeregt wird, über seine Ausgangsleiter Gruppen von Datenbits zu liefern, die zum Steuern der Erzeugung eines Bilds auf dem Aufzeichnungselement (11) bestimmt sind, das aus magnetisierten Punkten gebildet ist, die entweder im Inneren eines ersten Matrixtyps, der w horizontale Linien und z vertikale Linien enthält, die eine von der anderen durch einen Abstand, der gleich p ist (w und z sind ganze Zahlen, wobei z ≦ n), getrennt sind, oder im Inneren eines zweiten Matrixtyps verteilt sind, der w/2 horizontale und z/2 vertikale Linien enthält, die eine von der anderen durch einen Abstand, der gleich 2p ist, getrennt sind,
- eine erste Gruppe von Speicherblöcken, die f Blöcke (M1, M3, ... , M11) enthalten, die jeweils kn/2 Speicherstellen enthalten, die gemäß n Spalten (wie D1, D13, D25, ..., D(12n-11)) und k/2 Reihen angeordnet sind (k ist eine ganze Zahl, die mindestens gleich w ist), wobei diese k/2 Reihen mit dem Bitgenerator (47) verbunden sind, um Gruppen von w/2 Bits zu empfangen, die von diesem Generator geliefert werden, wobei jede dieser n Spalten jeweils an einen der Köpfe der ersten Gruppe (X₁, X₂, ..., Xₙ) angeschlossen ist, um diesen Köpfen das Empfangen der Datenbits in Form von elektrischen Impulsen zu ermöglichen, die Reihe für Reihe aus jedem der f Blöcke entnommen sind,
- eine zweite Gruppe von Speicherblöcken, die 2 f Blöcke (m₁, m₂, ..., m₁₂) enthält , die jeweils kn Speicherstellen enthalten, die gemäß n Spalten (wie D1, D13, D25, D(12n-11) und k Reihen angeordnet sind, wobei die k Reihen mit dem Bitgenerator (47) verbunden sind, um Gruppen von w Bits zu empfangen, die von diesem Generator geliefert werden, wobei jede dieser n Spalten jeweils mit einem der Köpfe der zweiten Gruppe (Y₁, Y₂ ..., Yₙ₊₁) verbunden ist, mit Ausnahme der f letzten Blöcke für den ersten (Y₁) dieser Köpfe und der f ersten Blöcke für den letzten (Yₙ₊₁) dieser Köpfe, um all diesen Köpfen das Empfangen der Datenbits in Form von elektrischen Impulsen zu ermöglichen, die Reihe für Reihe aus jedem dieser 2 f Blöcke entnommen sind.

4. Vorrichtung zur Erzeugung von latenten magnetischen Bildern gemäß Anspruch 3, dadurch gekennzeichnet, daß die Ausgangsleiter des Bitgenerators (47) sich in geradzahlige Leiter (B2, B4, B6, ...) und in ungeradzahlige Leiter (B1, B3, B5, ...) aufteilen, wobei die Steuereinheit (40) zur Aktivierung ferner enthält:
- einen ersten Kontakt (CM1), der auf der einen oder anderen von zwei Positionen angeordnet sein kann und eingerichtet ist, um ein erstes elektrisches Signal über eine erste Ausgangsklemme (SR) auszugeben, wenn er auf einer ersten Position angeordnet ist, und um ein elektrisches Signal über eine zweite Ausgangsklemme (DR) auszugeben, wenn er auf einer zweiten Position angeordnet ist,
- einen zweiten Kontakt (CM2), der auf der einen oder anderen von zwei Positionen angeordnet sein kann und eingerichtet ist, um ein elektrisches Signal über eine erste Ausgangsklemme (PT) auszugeben, wenn er auf einer ersten Position angeordnet ist, und um ein elektrisches Signal über eine zweite Ausgangsklemme (GT) auszugeben, wenn er auf einer zweiten Position angeordnet ist,
- ein erstes Steuertor (PRT1), das zwischen dem Bitgenerator (47) und den Speicherblöcken der ersten Gruppe (M1, M3, ..., M11) angeordnet ist, um die Übertragung der Gruppen von w/2 Datenbits zu steuern, die von diesem Generator an diese Blöcke mittels der ungeradzahligen Leiter (B1, B3, B5, ...) gesendet werden, wobei dieses Steuertor durchlässig gemacht wird, wenn der erste Kontakt (CM1) ein elektrisches Signal über seine erste Ausgangsklemme (SR) liefert und wenn gleichzeitig der zweite Kontakt (CM2) ein elektrisches Signal über seine zweite Ausgangsklemme (GT) liefert,
- und ein zweites Steuertor (PRT2), das zwischen dem Bitgenerator (47) und den Speicherblöcken der zweiten Gruppe (m1, m2, ..., m12) angeordnet ist, um die Übertragung der Gruppen von w Datenbits zu steuern, die von diesem Generator an diese Blöcke mittels der w Ausgangsleiter (B1, B2, B3, B4, ...) dieses Generators gesendet werden, wobei das zweite Steuertor durchlässig gemacht wird, wenn der erste Kontakt (CM1) ein elektrisches Signal über seine zweite Ausgangsklemme (DR) liefert und wenn gleichzeitig der zweite Kontakt (CM2) ein elektrisches Signal über seine erste Ausgangsklemme (PT) liefert.

5. Vorrichtung zur Erzeugung von latenten magnetischen Bildern gemäß Anspruch 4, dadurch gekennzeichnet, daß die Steuereinheit (40) zur Aktivierung ferner enthält:
- ein drittes Steuertor (PRT3), das zwischen dem Bitgenerator (47) und den Speicherblöcken der zweiten Gruppe (m1, m2, ..., m12) angeordnet ist, um die Übertragung von Gruppen von w/2 Datenbits zu steuern, die von diesem Generator an diese Blöcke mittels der geradzahligen Leiter (B2, B4, B6, ...) gesendet werden,
- eine Schaltanordnung (K2, K3, G3, BCP, E4, E5, U1, U2), die unter die Steuerung der zwei Kontakte (CM1 und CM2) gestellt und eingerichtet ist, um dann, wenn die zwei Kontakte gleichzeitig ein elektrisches Signal über ihre jeweilige zweite Ausgangsklemme (DR und GT) liefern, abwechselnd das zweite Steuertor (PRT2) und die aus dem ersten Steuertor (PRT1) und dem dritten Steuertor (PRT3) gebildete Anordnung durchlässig zu machen, damit die Gruppen von w Bits, die nacheinander vom Generator (47) geliefert werden, abwechselnd nur an die Blöcke der zweiten Gruppe und danach gleichzeitig an die Blöcke der beiden Serien gesendet werden können.

6. Vorrichtung zur Erzeugung von latenten magnetischen Bildern gemäß einem der Ansprüche 4 und 5, dadurch gekennzeichnet, daß die Steuereinheit (40) zur Aktivierung ferner enthält:
- einen ersten Impulsgenerator (PH1, AD1), der eingerichtet ist, um jedesmal, wenn das Aufzeichnungselement (11) sich um eine Länge gleich der doppelten Schrtittweite (p) der Spuren verschiebt, einen elektrischen Impuls zu liefern, wobei die von diesem Generator gelieferten elektrischen Impulse dazu bestimmt sind, an die Speicherblöcke der ersten Gruppe (M1, M3, ..., M11) gesendet zu werden, damit Reihe für Reihe die Entnahme von Datenbits bewirkt wird, die in diesen Blöcken aufgezeichnet worden sind,
- einen zweiten Impulsgenerator (PH2, AD2), der eingerichtet ist, um jedesmal, wenn das Aufzeichnungselement (11) sich um eine Länge gleich der Schrittweite (p) der Spuren verschiebt, einen elektrischen Impuls zu liefern, wobei die von diesem Generator gelieferten elektrischen Impulse dazu bestimmt sind, an die Speicherblöcke der zweiten Gruppe (m1, m2,..., m12) gesendet zu werden, damit Reihe für Reihe die Entnahme der Datenbits bewirkt wird, die in diesen Blöcken aufgezeichnet worden sind,
- und eine Steuergruppe (BCE, E6, K6, E7, K7), die eingerichtet ist, um aktiviert zu werden, wenn in den Speicherblöcken die Aufzeichnung der vom Bitgenerator (47) gelieferten Datenbits beendet ist, wobei diese Steuergruppe selbst unter die Steuerung der zwei Kontakte (CM1 und CM2) gestellt und ferner eingerichtet ist, um, sobald sie aktiviert ist, das Senden der von dem ersten Impulsgenerator (PH1, AD1) gelieferten Impulse an die Blöcke der ersten Gruppe in dem Fall zu erlauben, in dem der zweite Kontakt (CM2) ein elektrisches Signal über seine zweite Ausgangsklemme (GT) liefert, und das Senden der von dem zweiten Impulsgenerator (PH2, AD2) gelieferten Impulse an die Blöcke der zweiten Gruppe in dem Fall zu erlauben, in dem der erste Kontakt (CM1) ein elektrisches Signal über seine zweite Ausgangsklemme (DR) liefert.

7. Vorrichtung zur Erzeugung von latenten magnetischen Bildern gemäß Anspruch 6, dadurch gekennzeichnet, daß die Steuereinheit (40) zur Aktivierung ferner enthält:
- eine erste Gruppe von Abtastketten, die f Ketten (CLM1, CLM3, ..., CLM11) enthält, von denen jede jeweils einem der f Speicherblöcke der ersten Gruppe (M1, M3, ..., M11) zugeordnet ist, wobei jede Kette einerseits einen Eingang, der für das Empfangen der von dem ersten Impulsgenerator (PH1, AD1) gesendeten und unter der Steuerung der Steuergruppe (BCE, EG, K6, E7, K7) übertragenen Impulse bestimmt ist, und andererseits K/2 Ausgänge (A1, A3, ....Ag) enthält, von denen jede mit jeweils einer der Reihen des dieser Kette zugeordneten Blocks verbunden ist,
- eine zweite Gruppe von Abtastketten, die 2 f Ketten (CLm1, CLm2, .... CLm12) enthalten, von denen jede jeweils einem der 2 f Speicherblöcke der zweiten Gruppe (m1, m2, ..., m12) zugeordnet ist, wobei jede Kette einerseits einen Eingang (AP), der zum Empfangen der von dem zweiten Impulsgenerator (PH2, AD2) gesendeten und unter Steuerung der Steuergruppe (BCE, E6, K6, E7, K7) übertragenen Impulse bestimmt ist, und andererseits k Ausgänge (A1, A3, ... Ak) enthält, von denen jeder mit jeweils einer der Reihen des dieser Kette zugeordneten Blocks verbunden ist,
wobei jede dieser Ketten der ersten und der zweiten Gruppe eingerichtet ist, um in Antwort auf einen an ihren Eingang (AP) angelegten Impuls einen Impuls über lediglich einen ihrer Ausgänge zu liefern und dann um einem Schritt fortzuschreiten, damit das Liefern eines Impulses über den folgenden Ausgang dieser Kette möglich ist, wenn ein weiterer Impuls an diesen Eingang angelegt wird.

8. Vorrichtung zur Erzeugung von latenten magnetischen Bildern gemäß Anspruch 7, dadurch gekennzeichnet, daß die Steuereinheit (40) zur Aktivierung ferner enthält:
- eine erste Gruppe von f Steuerschaltungen (KM1, KM3, ..., KM11) von denen jede jeweils einer der Ketten der ersten Gruppe (CLM1, CLM3, ..., CLM11) zugeordnet und an den ersten Impulsgenerator (PH1, AD1) angeschlossen ist, um die von dem ersten Generator unter der Steuerung der Steuergruppe gesendeten Impulse zu empfangen, wobei jede dieser Steuerschaltungen selektiv durchlässig gemacht werden kann, um jeden der von ihr empfangenen Impulse zu übertragen und sie an den Eingang (AP) der Kette zu legen, welcher sie zugeordnet ist,
- einen ersten Zähler (CIM), der einen Eingang (CP) und f Paare von Ausgängen (N1, N2, ..., N12) enthält, wobei jedes dieser Paare von Ausgängen (wie N1, N2) an jeweils eine der f Steuerschaltungen der ersten Gruppe angeschlossen ist, damit jede dieser Schaltungen einzeln durchlässig gemacht werden kann, wenn ein elektrisches Signal an dem einen oder dem anderen der zwei Ausgänge (z.B. N1 und N2) ansteht, die an diese Schaltung angeschlossen sind, wobei der Eingang (CP) dieses Zählers mit dem letzten Ausgang (Ag) der Abtastketten der ersten Gruppe verbunden ist, um die über diese Ausgänge (Ag) gelieferten Impulse zu empfangen, wobei der Zähler so eingerichtet ist, um einerseits ein elektrisches Signal über einen einzigen seiner 2 f Ausgänge (N1, N2, ..., N12) zu liefern, und um andererseits, jedesmal wenn ein Impuls an seinen Eingang (CP) anliegt, um einen Schritt fortzuschreiten,
- eine zweite Gruppe von 2 f Steuerschaltungen (Km1, Km2, ..., Km12), wovon jede jeweils einer der Ketten der zweiten Gruppe (CLm1, CLm2, ..., CLm12) zugeordnet und an den zweiten Impulsgenerator (PH2, AD2) angeschlossen ist, um die von diesem zweiten Generator unter der Steuerung der zweiten Steuergruppe gesendeten Impulse zu empfangen, wobei jede dieser Steuerschaltungen selektiv durchlässig gemacht werden kann, um jeden der von ihr empfangenen Impulse zu übertragen und sie an den Eingang (AP) der Kette zu legen, welcher sie zugeordnet ist,
- einen zweiten Zähler (CIm), der einen Eingang (CP) und 2 f Ausgänge (N1, N2, ..., N12) enthält, wobei jeder dieser 2 f Ausgänge mit jeweils einer der 2 f Steuerschaltungen der zweiten Gruppe verbunden ist, damit jede dieser Schaltungen einzeln durchlässig gemacht werden kann, wenn ein elektrisches Signal am Ausgang anliegt, der an diese Schaltung angeschlosssen ist, wobei der Eingang (CP) dieses zweiten Zählers mit dem letzten Ausgang (Ak) der Abtastketten der zweiten Gruppe verbunden ist, um die über diese Ausgänge (Ak) gelieferten Impulse zu empfangen, wobei dieser zweite Zähler eingerichtet ist, um einerseits ein elektrisches Signal über einen einzigen seiner 2 f Ausgänge (N1, N2, ..., N12) zu liefern, und um andererseits, jedesmal wenn ein Impuls an seinen Eingang (CP) angelegt wird, um einen Schritt fortzuschreiten.

9. Vorichtung zur Erzeugung von latenten magnetischen Bildern gemäß Anspruch 8, dadurch gekennzeichnet, daß die Steuereinheit (40) zur Aktivierung ferner ein Verzögerungselement (R1), das angeschlossen ist, um die über den letzten Ausgang (Ag) jeder der Abtastketten der ersten Gruppe (CLm1, CLM1, CLM3, ..., CLM11) gelieferten Impulse zu empfangen, und eine Steuerschaltung (K9) enthält, die angeordnet ist, um die verzögerten von diesem Verzögerungselement gelieferten Impulse zu empfangen und sie an den Eingang (CP) des ersten Zählers (CIM) legt, wenn sie durchlässig gemacht wird, wobei diese Steuerschaltung (K9) außerdem mit der ersten Ausgangsklemme (SR) des ersten Kontakts (CM1) verbunden ist, derart, daß dann, wenn dieser Kontakt so positioniert ist, daß er ein elektrisches Signal über seine erste Ausgangsklemme liefert, diese Steuerschaltung (K9) durchlässig gemacht ist und die verzögerten Impulse, die sie empfängt, an den Eingang (CP) des ersten Zählers (CIM) gelegt werden, was zur Folge hat, daß dieser Zähler um zwei Schritte anstelle von einem Schritt am Ende der Entnahme der Bits aus jedem der Speicherblöcke der ersten Gruppe (M1, M3, ..., M11) fortschreitet.

10. Vorrichtung zur Erzeugung von latenten magnetischen Bildern gemäß einem der Ansprüche 2 bis 9, dadurch gekennzeichnet, daß der Wert von f gleich 6 gewählt ist.

## Claims

1. Device for forming latent magnetic images comprising a recording element (11) and several magnetic recording heads, this recording element being displaced in a predetermined direction (F) and being provided with magnetic recording tracks (D₁, D₂, D₃, ...) oriented practically parallel to this direction, said tracks being spaced apart from each other by a constant pitch (p), this device being characterised in that it comprises:
- at least two magnetic recording heads (X₁, Y₁) each having a recording pole (E) the width of which differs from one head to the other, the width (e₁) of the widest pole being greater than the pitch (p) of the tracks, the width (e₂) of the narrowest pole being such that the sum (e₁ + e₂) of the widths of the widest pole and the narrowest pole is less than twice said pitch,
- a drive member (33, 34, 35, 36) for bringing these heads successively opposite each of said tracks and allowing these heads, when they are excited selectively, to form magnetised points (PM1, PM2) of different sizes centred on these tracks,
- and a unit for controlling actuation of the heads (40) designed for selectively exciting these heads in such a way that the magnetised points formed on the recording element do not overlap.

2. Device for forming latent magnetic images according to claim 1, characterised in that, the number of tracks of the recording element (11) being equal to 2fn (f and n being integers) and the drive member comprising a movable support (34) capable of being displaced in a direction (T) perpendicular to the direction of displacement (F) of this recording element, the magnetic recording heads are divided between a first series of heads comprising n heads of the same size (X₁, X₂, ..., Xₙ) and a second series of heads comprising (n + 1) heads of the same size (Y₁, Y₂, ..., Yₙ, Yₙ₊₁), the size of the heads of this second series being different to that of the heads of the first series, all these heads being rigidly connected to said movable support (34) and being distributed evenly therealong with a spacing equal to fp, the heads of the second series being arranged alternately with those of the first series, each head of the first series being placed between two heads of the second series.

3. Device for forming latent magnetic images according to claim 2, characterised in that, the heads of the first series having a size greater than that of the heads of the second series, the actuation control unit (40) comprises:
- a data bit generator (47) provided with w output conductors (B1, B2, ..., Bw), w being an integer < n, this generator being designed to deliver at its output conductors, when it is excited, groups of data bits for controlling the formation, on the recording element (11), of an image consisting of magnetised points distributed either within a first type of matrix comprising w horizontal lines and z vertical lines spaced apart from each other by a distance equal to p (w and z being integers with z ≦ n), or within a second type of matrix comprising w/2 horizontal lines and z/2 vertical lines spaced apart from each other by a distance equal to 2p,
- a first series of storage blocks comprising f blocks (M1, M3, ..., M11) each comprising kn/2 storage positions arranged in n columns (such as D1, D13, D25, ..., D(12n-11)) and k/2 rows (k being an integer at least equal to w), these k/2 rows being connected to said bit generator (47) to receive groups of w/2 bits delivered by this generator, each of these n columns being connected respectively to each of the heads of the first series (X₁, X₂, ..., Xₙ) to allow these heads to receive, in the form of electrical pulses, the data bits which are extracted from each of these f blocks, row by row,
- a second series of storage blocks comprising 2 f blocks (m1, m2, ..., m12) each comprising kn storage positions arranged in n columns (such as D1, D13, D25, ..., D(12n-11)) and k rows, these k rows being connected to said bit generator (47) to receive groups of w bits delivered by this generator, each of these n columns being connected respectively to each of the heads of the second series (Y₁, Y₂, ..., Yₙ₊₁), with the exception of the last f blocks for the first (Y₁) of these heads and the first f blocks for the last (Yₙ₊₁) of these heads, to allow all these heads to receive, in the form of electrical pulses, the data bits which are extracted from each of these 2 f blocks, row by row.

4. Device for forming latent magnetic images according to claim 3, characterised in that, the output conductors of the bit generator (47) being divided into even-numbered conductors (B2, B4, B6, ...) and odd-numbered conductors (B1, B3, B5, ...), the actuation control unit (40) further comprises:
- a first contact (CM1) capable of being placed in either of two positions and designed to deliver, when it is placed in a first position, an electrical signal to a first output terminal (SR), and to deliver, when it is placed in a second position, an electrical signal to a second output terminal (DR),
- a second contact (CM2) capable of being placed in either of two positions and designed to deliver, when it is placed in a first position, an electrical signal to a first output terminal (PT), and to deliver, when it is placed in a second position, an electrical signal to a second output terminal (GT),
- a first gate (PRT1) arranged between the bit generator (47) and the storage blocks of the first series (M1, M3, ..., M11) for monitoring transmission of the groups of w/2 data bits which are dispatched by this generator to these blocks, by way of said odd-numbered conductors (B1, B3, B5, ...), this gate being caused to conduct when the first contact (CM1) delivers an electrical signal to its first output terminal (SR) and when, simultaneously, the second contact (CM2) delivers an electrical signal to its second output terminal (GT),
- and a second gate (PRT2) arranged between the bit generator (47) and the storage blocks of the second series (m1, m2, ..., m12) for monitoring transmission of the groups of w data bits which are dispatched by this generator to these blocks, by way of the w output conductors (B1, B2, B3, B4, ...) of this generator, this second gate being caused to conduct when the first contact (CM1) delivers an electrical signal to its second output terminal (DR) and when, simultaneously, the second contact (CM2) delivers an electrical signal to its first output terminal (PT).

5. Device for forming latent magnetic images according to claim 4, characterised in that the actuation control unit (40) further comprises:
- a third gate (PRT3) arranged between the bit generator (47) and the storage blocks of the second series (m1, m2, ..., m12) for monitoring transmission of the groups of w/2 data bits which are dispatched by this generator to these blocks, by way of the even-numbered conductors (B2, B4, B6, ...),
- a switching assembly (K2, K3, G3, BCP, E4, E5, U1, U2) placed under the control of the two contacts (CM1 and CM2) and designed to cause, when these two contacts simultaneously deliver an electrical signal to their respective second output terminals (DR and GT), the second gate (PRT2) and the assembly formed by the first gate (PRT1) and the third gate (PRT3) to conduct alternately, in order to allow the groups of w bits delivered successively by the generator (47) to be dispatched alternately, only to the blocks of the second series, then, simultaneously, to the blocks of both series.

6. Device for forming latent magnetic images according to either of claims 4 and 5, characterised in that the actuation control unit (40) further comprises:
- a first pulse generator (PH1, AD1) designed to deliver an electrical pulse every time the recording element (11) has been displaced by a length equal to twice the pitch (p) of the tracks, the pulses delivered by this generator being intended to be dispatched to the storage blocks of the first series (M1, M3, ..., M11) in order to cause extraction, row by row, of the data bits which have been recorded in these blocks,
- a second pulse generator (PH2, AD2) designed to deliver an electrical pulse every time the recording element (11) has been displaced by a length equal to the pitch (p) of the tracks, the pulses delivered by this generator being intended to be dispatched to the storage blocks of the second series (m1, m2, ..., m12) in order to cause extraction, row by row, of the data bits which have been recorded in these blocks,
- and a control group (BCE, E6, K6, E7, K7) designed to be actuated when recording, in the storage blocks, of the data bits delivered by the bit generator (47) is complete, this control group being itself placed under the control of the two contacts (CM1 and CM2) and being further designed, as soon as it is actuated, to enable dispatch, to the blocks of the first series, of the pulses delivered by the first pulse generator (PH1, AD1), in the event that the second contact (CM2) delivers an electrical signal to its second output terminal (GT), and to enable dispatch, to the blocks of the second series, of the pulses delivered by the second pulse generator (PH2, AD2), in the event that the first contact (CM1) delivers an electrical signal to its second output terminal (DR).

7. Device for forming latent magnetic images according to claim 6, characterised in that the actuation control unit (40) further comprises:
- a first group of scanning sequences comprising f sequences (CLM1, CLM3, ..., CLM11) each respectively associated with each of the f storage blocks of the first series (M1, M3, ..., M11), each sequence comprising on the one hand an input (AP) for receiving the pulses dispatched by the first pulse generator (PH1, AD1) and transmitted under the control of the control group (BCE, EG, K6, E7, K7), and on the other hand k/2 outputs (A1, A3, ..., Ag) each respectively connected to each of the rows of the block associated with this sequence,
- a second group of scanning sequences comprising 2 f sequences (CLm1, CLm2, ..., CLm12) each respectively associated with each of the 2 f storage blocks of the second series (m1, m2, ..., m12), each sequence comprising on the one hand an input (AP) for receiving the pulses dispatched by the second pulse generator (PH2, AD2) and transmitted under the control of the control group (BCE, EG, K6, E7, K7), and on the other hand k outputs (A1, A3, ..., Ak) each respectively connected to each of the rows of the block associated with this sequence,
each of the sequences of the first and second groups being designed, in response to a pulse applied to its input (AP), to deliver a pulse to only one of its outputs and then progress by one step in order to allow, when another pulse is applied to this input, the delivery of a pulse to the next output of this sequence.

8. Device for forming latent magnetic images according to claim 7, characterised in that the actuation control unit (40) further comprises:
- a first group of f control circuits (KM1, KM3, ..., KM11) each respectively associated with each of the sequences of the first group (CLM1, CLM3, ..., CLM11) and connected to the first pulse generator (PH1, AD1) to receive the pulses dispatched by this first generator under the control of the control group, each of these control circuits capable of being caused selectively to conduct in order to transmit each of the pulses which it receives and to apply them to the input (AP) of the sequence with which it is associated,
- a first counter (CIM) comprising one input (CP) and f pairs of outputs (N1, N2, ..., N12), each of these pairs of outputs (such as N1, N2) being respectively connected to each of the f control circuits of the first group in order to allow each of these circuits to be caused to conduct only when an electrical signal appears at either of the two outputs (N1 and N2, for example) which are connected to this circuit, the input (CP) of this counter being connected to the last output (Ag) of the scanning sequences of the first group to receive the pulses delivered to these outputs (Ag), this counter being designed on the one hand to deliver an electrical signal to only one of its 2 f outputs (N1, N2, ..., N12), and on the other hand to progress by one step every time a pulse is applied to its input (CP),
- a second group of 2 f control circuits (Km1, Km2, ..., Km12) each respectively associated with each of the sequences of the second group (CLm1, CLm2, ..., CLm12) and connected to the second pulse generator (PH2, AD2) to receive the pulses dispatched by this second generator under the control of the control group, each of these control circuits capable of being caused selectively to conduct in order to transmit each of the pulses which it receives and to apply them to the input (AP) of the sequence with which it is associated,
- a second counter (CIm) comprising one input (CP) and 2 f outputs (N1, N2, ..., N12), each of these 2 f outputs being respectively connected to each of the 2 f control circuits of the second group in order to allow each of these circuits to be caused to conduct only when an electrical signal appears at the output which is connected to this circuit, the input (CP) of this second counter being connected to the last output (Ak) of the scanning sequences of the second group to receive the pulses delivered to these outputs (Ak), this second counter being designed on the one hand to deliver an electrical signal to only one of its 2 f outputs (N1, N2, ..., N12), and on the other hand to progress by one step every time a pulse is applied to its input (CP).

9. Device for forming latent magnetic images according to claim 8, characterised in that the actuation control unit (40) further comprises a delay element (R1) connected to receive the pulses delivered to the last output (Ag) of each of the scanning sequences of the first group (CLM1, CLM3, ..., CLM11), and a control circuit (K9) arranged to receive the delayed pulses delivered by this delay element and to apply them, if it is caused to conduct, to the input (CP) of the first counter (CIM), this control circuit (K9) being moreover connected to the first output terminal (SR) of the first contact (CM1), so that, when this contact is positioned so as to deliver an electrical signal to its first output terminal, this control circuit (K9) is caused to conduct and applies the delayed pulses which it receives to the input (CP) of the first counter (CIM), which then has the effect of causing this counter to progress by two steps, instead of one step, for the purpose of extraction of the bits from each of the storage blocks of the first series (M1, M3, ..., M11).

10. Device for forming latent magnetic images according to any of claims 2 to 9, characterised in that the value of f is taken as being equal to six.
